(19) Europäisches Patentamt / European Patent Office / Office européen des brevets

(11) **EP 4 277 309 A1**

(12) **EUROPEAN PATENT APPLICATION**
published in accordance with Art. 153(4) EPC

(43) Date of publication:
**15.11.2023 Bulletin 2023/46**

(21) Application number: **22739178.6**

(22) Date of filing: **17.01.2022**

(51) International Patent Classification (IPC):
**H04W 4/24** (2018.01)        **H04L 12/14** (2006.01)

(52) Cooperative Patent Classification (CPC):
**H04L 12/14; H04W 4/24**

(86) International application number:
**PCT/CN2022/072382**

(87) International publication number:
**WO 2022/152303 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021  CN 202110058017**

(71) Applicant: **Huawei Technologies Co., Ltd.
Shenzhen, Guangdong 518129 (CN)**

(72) Inventor: **CHAI, Xiaoqian
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **METHOD AND SYSTEM FOR PERFORMING BILLING PROCESSING ON MOBILE LOCAL AREA NETWORK SERVICE, AND RELATED DEVICE**

(57)    A method for performing charging processing on a mobile local area network service is disclosed and includes: A charging trigger device sends local area network charging information to a charging processing device, where the local area network charging information is charging information related to the mobile local area network service, and the mobile local area network service is a service in which a telecom operator provides intra-group communication for a mobile local area network group based on at least one user plane data gateway managed by the charging trigger device. The charging processing device receives the local area network charging information, performs charging processing on the local area network charging information, and then sends a charging processing result of the local area network charging information to the charging trigger device. In the method, refined charging processing can be performed on the mobile local area network service. This helps improve charging accuracy, and flexibly support a plurality of charging requirements.

FIG. 4A

**Description**

This disclosure claims priority to Chinese Patent Application No. 202110058017.2, filed with the China National Intellectual Property Administration on January 15, 2021 and entitled "METHOD FOR PERFORMING CHARGING PROCESSING ON MOBILE LOCAL AREA NETWORK SERVICE, SYSTEM, AND RELATED DEVICE", which is incorporated herein by reference in its entirety.

**TECHNICAL FIELD**

This disclosure relates to the communication field, and in particular, to a method for performing charging processing on a mobile local area network service, a system, and a related device.

**BACKGROUND**

A conventional local area network (local area network, LAN) is a communication network formed by interconnecting a plurality of user devices, servers, and the like in a specific geographical area, can implement functions such as file management and data sharing between the plurality of user devices, and has advantages of high data transmission efficiency and a low bit error rate; but has a small geographical coverage range, for example, covers only one enterprise campus, and a user device in the conventional local area network cannot move.

A wireless local area network (wireless local area network, WLAN) is greatly improved in terms of mobility of a user device compared with the conventional local area network, but has a small geographical coverage range, for example, can cover only one workshop, or one floor, due to limitations of transmit power and a networking scale of the wireless access device (such as a wireless router).

A virtual private network (Virtual Private Network, VPN) can implement interconnection between components and resources of different networks, can create a tunnel for a user by using an infrastructure of the internet (internet) or another public internet network, can cover a large range, for example, a whole province or even a whole country, and also provide same security and functionality as a private network. However, this is a connection technology constructed on a public communication infrastructure. An operator has weak control over a network resource in the connection technology, and it is difficult to ensure quality of service (Quality of Service, QoS) of communication between user devices, and increasingly difficult to meet a market requirement.

A recently emerged mobile local area network, for example, a 5th generation communication system local area network (5th Generation local area network, 5G LAN), relies on a data exchange or routing forwarding capability of a core network device of a telecom operator, and can provide internet protocol (internet protocol, IP) type or non-IP type (such as Ethernet type) communication for any two or more user devices in a group of user devices, to implement point-to-point or point-to-multipoint data transmission between the user devices. Such communication service can cover a wide geographical range, such as a whole province or even a whole country. Therefore, the mobile local area network is applicable to scenarios such as enterprise office, factory manufacturing, internet of vehicles, power grid maintenance, and home communication. For example, hundreds of industrial control devices in a multinational factory in different provinces, cities or countries can form an "industrial control device group", and the industrial control devices in this group send Ethernet data packets to each other. For another example, thousands of office devices (such as mobile phones, computers, and laptop computers) of a large enterprise in different offices may form an "office device group", and the office devices in the group may send IP data packets to each other. In these scenarios, an operator has a management and control capability on a user plane data gateway, and can better ensure QoS of data transmission between user devices. Therefore, overall performance is better than that of the conventional LAN, the WLAN, and the VPN.

However, an existing charging processing device, such as a charging function (CHarging Function, CHF) device defined in a 3rd Generation Partnership Project (3rd Generation Partnership Project, 3GPP) standard specification, can independently perform charging processing only on a conventional communication service of a single user device. Therefore, how to perform charging processing on a communication service between member user devices in a mobile local area network is a technical problem that urgently needs to be resolved.

**SUMMARY**

In view of this, it is necessary to provide a method for performing charging processing on a mobile local area network service, so as to resolve problems such as inaccurate charging and inability to flexibly support a plurality of charging requirements due to charging processing performed on the mobile local area network service by using a conventional charging processing method.

According to a first aspect, an embodiment of this application provides a method for performing charging processing on a mobile local area network service, applied to a charging trigger device. The charging trigger device communicates with a charging processing device, the charging trigger device manages at least one user plane data gateway, the mobile local area network service is a service that provides intra-group communication for a mobile local area network group based on the at least one user plane data gateway, and the method includes:

sending a charging request message to the charging processing device, where the charging request message includes local area network charging information obtained by the charging trigger device, and the local area network charging information is charging information related to the mobile local area network service; and

receiving a charging response message from the charging processing device, where the charging response message includes a charging processing result, and the charging processing result is a result of charging processing performed by the charging processing device on the local area network charging information.

In a possible solution, if the local area network charging information includes charging information of a member data connection session, the charging processing result includes a result of charging processing performed by the charging processing device on the charging information of the member data connection session; and the member data connection session is a data connection session between a member user device in the mobile local area network group that uses the mobile local area network service and a corresponding user plane data gateway.

In a possible solution, the charging information of the member data connection session includes first service indication information, and the first service indication information indicates that the member data connection session is used for intra-group communication in the mobile local area network group.

In a possible solution, the charging information of the member data connection session includes a group identifier, and the group identifier is an identifier of the mobile local area network group.

In a possible solution, the charging information of the member data connection session further includes first charging data, and the first charging data includes usage of and/or a quota application amount for the member data connection session; and the charging processing result includes a result of charging processing performed by the charging processing device on the first charging data.

In a possible solution, the charging information of the member data connection session further includes an intra-group forwarding manner corresponding to the first charging data; and the intra-group forwarding manner is any one of the following: local switching forwarding, gateway tunnel forwarding, and data network forwarding.

In a possible solution, the charging information of the member data connection session further includes an intra-group communication mode of the member user device, and the intra-group communication mode is any one of the following: unicast, multicast, or broadcast.

In a possible solution, if the charging request message requests the charging processing device to create a charging resource for the member data connection session, the charging processing result includes an identifier of the charging resource created by the charging processing device for the member data connection session.

In a possible solution, if the charging request message requests the charging processing device to update a charging resource of the member data connection session, the charging processing result includes a result of updating the charging resource of the member data connection session.

In a possible solution, if the charging request message requests the charging processing device to delete a charging resource of the member data connection session, the charging processing result includes a result of deleting the charging resource of the member data connection session.

According to the charging processing method in the first aspect, the charging trigger device can collect and report charging information related to each member data connection session in the mobile local area network group, so that the charging processing device can better measure a contribution made by a telecom operator network to intra-group communication. Refined charging processing can be performed on the mobile local area network service. This helps improve charging accuracy, and flexibly support a plurality of charging requirements. For example, charging can be performed based on end-to-end usage.

In a possible solution, if the charging trigger device manages two or more user plane data gateways, and the local area network charging information includes charging information of an inter data gateway tunnel, the charging processing result includes a result of charging processing performed by the charging processing device on the charging information of the inter data gateway tunnel; and the inter data gateway tunnel is a data transmission tunnel between two user plane data gateways managed by the charging trigger device, and the charging information of the inter data gateway tunnel includes information about the inter data gateway tunnel.

In a possible solution, the charging information of the inter data gateway tunnel further includes second service indication information, and the second service indication information indicates that the inter data gateway tunnel is used for intra-group communication in the mobile local area network group.

In a possible solution, the charging information of the inter data gateway tunnel further includes a group identifier, and the group identifier is an identifier of the mobile local area network group.

In a possible solution, the charging information of the member data connection session further includes second charging data, and the second charging data includes usage transmitted through the inter data gateway tunnel; and the charging processing result includes a result of charging processing performed by the charging processing device on the second charging data.

In a possible solution, if the charging request message requests the charging processing device to create a charging resource for the inter data gateway tunnel, the charging processing result includes an identifier of the charging resource created by the charging processing device for the inter data gateway tunnel.

In a possible solution, if the charging request message requests the charging processing device to update a charging resource of the inter data gateway tunnel, the charging processing result includes a result of updating the charging resource of the inter data gateway tunnel.

In a possible solution, if the charging request message requests the charging processing device to delete a charging resource of the inter data gateway tunnel, the charging processing result includes a result of deleting the charging resource of the inter data gateway tunnel.

According to the charging processing method in the first aspect, the charging trigger device can further collect and report the charging information of the inter data gateway tunnel related to intra-group communication in the mobile local area network group, so that the charging processing device can measure the contribution of the operator network to intra-group communication more comprehensively (a contribution of the inter data gateway tunnel is supplemented). More refined charging processing is performed on the mobile local area network service. This helps further improve charging accuracy, and can also support more charging requirements. For example, charging can be performed based on usage of a network resource (for example, the inter data gateway tunnel).

According to a second aspect, an embodiment of this disclosure provides a method for performing charging processing on a mobile local area network service, applied to a charging processing device. The charging processing device communicates with a charging trigger device, the mobile local area network service is a service that provides intra-group communication for a mobile local area network group, and the method includes:

receiving a charging request message from the charging trigger device, where the charging request message includes local area network charging information obtained by the charging trigger device, and the local area network charging information is charging information related to the mobile local area network service; and
sending a charging response message to the charging trigger device, where the charging response message includes a charging processing result, and the charging processing result is a result of charging processing performed by the charging processing device on the local area network charging information.

In a possible solution, if the local area network charging information includes charging information of a member data connection session, before the sending a charging response message to the charging trigger device, the method further includes: performing charging processing on the charging information of the member data connection session; and the charging processing result includes a result of performing charging processing on the charging information of the member data connection session; and the member data connection session is a data connection session between a member user device in the mobile local area network group that uses the mobile local area network service and a corresponding user plane data gateway.

In a possible solution, if the charging information of the member data connection session includes first service indication information, the performing charging processing on the charging information of the member data connection session includes: determining, based on the first service indication information, that the member data connection session is used for intra-group communication in the mobile local area network group.

In a possible solution, the performing charging processing on the charging information of the member data connection session further includes: performing, based on the first service indication information, authentication on whether the member user device can use the mobile local area network service, where the charging processing result includes a result of the authentication.

In a possible solution, if the charging information of the member data connection session includes a group identifier, and the group identifier is an identifier of the mobile local area network group, the performing charging processing on the charging information of the member data connection session includes any one of the following:

determining, based on the group identifier, an account corresponding to the mobile local area network group; or
recording the group identifier in a charging data record of the member data connection session; or
associating usage of members by using the group identifier as an association identifier and obtaining usage of the mobile local area network group through accumulation; or
querying, based on the group identifier, an external group identifier corresponding to the mobile local area network group, so as to perform charging processing on the charging information of the member data connection session based on the external group identifier.

In a possible solution, if the charging information of the member data connection session includes first charging data, and the first charging data includes usage of and/or a quota application amount for the member data connection session, the performing charging processing on the charging information of the member data connection session includes: performing charging processing on the first charging data, where the charging processing result includes a result of performing charging processing on the first charging data.

In a possible solution, if the charging information of the member data connection session further includes an intra-group forwarding manner corresponding to the first charging data, and the intra-group forwarding manner is any one of the following: local switching forwarding, gateway tunnel forwarding, and data network forwarding, the performing charging processing on the charging information of the member data connection session further includes: determining a charging rate of the first charging data based on the intra-group forwarding manner, or recording, in a charging data record of the member data connection session, the first charging data and the intra-group forwarding manner corresponding to the first charging data.

In a possible solution, if the charging information of the member data connection session further includes an intra-group communication mode of the member user device, and the intra-group communication mode is any one of the following: unicast, multicast, or broadcast, the performing charging processing on the charging information of the member data connection session further includes: determining the charging rate of the first charging data based on the intra-group communication mode, or recording the intra-group communication mode in the charging data record of the member data connection session.

In a possible solution, if the charging request message requests the charging processing device to create a charging resource for the member data connection session, the performing charging processing on the charging information of the member data connection session includes: creating the charging resource for the member data connection session, where the charging processing result includes an identifier of the charging resource.

In a possible solution, if the charging request message requests the charging processing device to update a charging resource of the member data connection session, the performing charging processing on the charging information of the member data connection session includes: updating the charging resource of the member data connection session, where the charging processing result includes a result of updating the charging resource of the member data connection session.

In a possible solution, if the charging request message requests the charging processing device to delete a charging resource of the member data connection session, the performing charging processing on the charging information of the member data connection session includes: deleting the charging resource of the member data connection session, where the charging processing result includes a result of deleting the charging resource of the member data connection session.

In a possible solution, if the local area network charging information includes charging information of an inter data gateway tunnel, before the sending a charging response message to the charging trigger device, the method further includes: performing charging processing on the charging information of the inter data gateway tunnel, where the charging processing result includes a result of performing charging processing on the charging information of the inter data gateway tunnel; and the inter data gateway tunnel is a data transmission tunnel between two user plane data gateways managed by the charging trigger device, and the charging information of the inter data gateway tunnel includes information about the inter data gateway tunnel.

In a possible solution, if the charging information of the inter data gateway tunnel further includes second service indication information, the performing charging processing on the charging information of the inter data gateway tunnel includes: determining, based on the second service indication information, that the inter data gateway tunnel is used for intra-group communication in the mobile local area network group.

In a possible solution, if the charging information of the inter data gateway tunnel further includes a group identifier, and the group identifier is an identifier of the mobile local area network group, the performing charging processing on the charging information of the inter data gateway tunnel includes any one of the following:

determining, based on the group identifier, an account corresponding to the mobile local area network group; or
recording the group identifier in a charging data record of the inter data gateway tunnel; or
querying, based on the group identifier, an external group identifier corresponding to the mobile local area network group, so as to perform charging processing on the charging information of the inter data gateway tunnel based on the external group identifier.

In a possible solution, if the charging information of the member data connection session further includes second charging data, and the second charging data includes usage transmitted through the inter data gateway tunnel, the performing charging processing on the charging information of the inter data gateway tunnel further includes: performing charging processing on the second charging data, where the charging processing result includes a result of performing charging processing on the second charging data.

In a possible solution, if the charging request message requests the charging processing device to create a charging resource for the inter data gateway tunnel, the performing charging processing on the charging information of the inter data gateway tunnel includes: creating the charging resource for the inter data gateway tunnel, where the charging processing result includes an identifier of the charging resource.

In a possible solution, if the charging request message requests the charging processing device to update a charging resource of the inter data gateway tunnel, the performing charging processing on the charging information of the inter data gateway tunnel includes: updating the charging resource of the inter data gateway tunnel, where the charging processing result includes a result of updating the charging resource of the inter data gateway tunnel.

In a possible solution, if the charging request message requests the charging processing device to delete a charging resource of the inter data gateway tunnel, the performing charging processing on the charging information of the inter data gateway tunnel includes: deleting the charging resource of the inter data gateway tunnel, where the charging processing result includes a result of deleting the charging resource of the inter data gateway tunnel.

According to a third aspect, an embodiment of this disclosure provides a charging processing system, configured to perform charging processing on a mobile local area network service and including a charging trigger device and a charging processing device. The charging trigger device communicates with the charging processing device, the charging trigger device manages at least one user plane data gateway, and the mobile local area network service is a service that provides intra-group communication for a mobile local area network group based on the at least one user plane data gateway;

the charging trigger device is configured to send a charging request message to the charging processing device, where the charging request message includes local area network charging information obtained by the charging trigger device, and the local area network charging information is charging information related to the mobile local area network service;

the charging processing device is configured to: receive the charging request message from the charging trigger device, and send a charging response message to the charging trigger device, where the charging response message includes a charging processing result, and the charging processing result is a result of charging processing performed by the charging processing device on the local area network charging information; and

the charging trigger device is further configured to receive the charging response message from the charging processing device.

In a possible solution, if the local area network charging information includes charging information of a member data connection session, the charging processing device is further configured to perform charging processing on the charging information of the member data connection session, where the charging processing result includes a result of charging processing performed by the charging processing device on the charging information of the member data connection session; and the member data connection session is a data connection session between a member user device in the mobile local area network group that uses the mobile local area network service and a corresponding user plane data gateway.

In a possible solution, if the charging information of the member data connection session includes first service indication information, the charging processing device is further configured to determine, based on the first service indication information, that the member data connection session is used for intra-group communication in the mobile local area network group.

In a possible solution, the charging processing device is further configured to perform, based on the first service indication information, authentication on whether the member user device can use the mobile local area network service, and the charging processing result includes a result of the authentication.

In a possible solution, if the charging information of the member data connection session further includes a group identifier, and the group identifier is an identifier of the mobile local area network group, the charging processing device is further configured to:

determine, based on the group identifier, an account corresponding to the mobile local area network group; or
record the group identifier in a charging data record of the member data connection session; or
associate usage of members by using the group identifier as an association identifier and obtain usage of the mobile local area network group through accumulation; or
query, based on the group identifier, an external group identifier corresponding to the mobile local area network group, so as to perform charging processing on the charging information of the member data connection session based on the external group identifier.

In a possible solution, if the charging information of the member data connection session includes first charging data and an intra-group forwarding manner, the first charging data includes usage of and/or a quota application amount for the member data connection session, and the intra-group forwarding manner is any one of the following: local switching forwarding, gateway tunnel forwarding, and data network forwarding, the charging processing device is further configured to:

determine a charging rate of the first charging data based on the intra-group forwarding manner; or
record, in the charging data record of the member data connection session, the first charging data and the intra-group forwarding manner corresponding to the first charging data.

In a possible solution, if the charging trigger device manages two or more user plane data gateways, and the local area network charging information includes charging information of an inter data gateway tunnel, the charging processing device is further configured to: before sending the charging response message to the charging trigger device, perform charging processing on the charging information of the inter data gateway tunnel, where the charging processing result includes a result of charging processing performed by the charging processing device on the charging information of the inter data gateway tunnel; and the inter data gateway tunnel is a data transmission tunnel between two user plane data gateways managed by the charging trigger device, and the charging information of the inter data gateway tunnel includes information about the inter data gateway tunnel.

In a possible solution, if the charging information of the inter data gateway tunnel further includes second service indication information, the charging processing device is further configured to determine, based on the second service indication information, that the inter data gateway tunnel is used to provide the mobile local area network service.

In a possible solution, if the charging information of the inter data gateway tunnel further includes a group identifier, and the group identifier is an identifier of the mobile local area network group, the charging processing device is further configured to:

determine, based on the group identifier, an account corresponding to the mobile local area network group; or
record the group identifier in a charging data record of the inter data gateway tunnel; or
query, based on the group identifier, an external group identifier corresponding to the mobile local area network group, so as to perform charging processing on the charging information of the inter data gateway tunnel based on the external group identifier.

According to a fourth aspect, an embodiment of this disclosure provides a charging trigger device, configured to perform charging processing on a mobile local area network service. The charging trigger device communicates with a charging processing device, the charging trigger device manages at least one user plane data gateway, the mobile local area network service is a service that provides intra-group communication for a mobile local area network group based on the at least one user plane data gateway, and the charging trigger device includes an obtaining module, a sending module, and a receiving module;

the obtaining module is configured to obtain local area network charging information, where the local area network charging information is charging information related to the mobile local area network service;
the sending module is configured to send a charging request message to the charging processing device, where the charging request message includes the local area network charging information; and
the receiving module is configured to receive a charging response message from the charging processing device, where the charging response message includes a charging processing result, and the charging processing result is a result of charging processing performed by the charging processing device on the local area network charging information.

In a possible solution, if the local area network charging information includes charging information of a member data connection session, the charging processing result includes a result of charging processing performed by the charging processing device on the charging information of the member data connection session; and the member data connection session is a data connection session between a member user device in the mobile local area network group that uses the mobile local area network service and a corresponding user plane data gateway.

In a possible solution, the charging information of the member data connection session includes first service indication information, and the first service indication information indicates that the member data connection session is used for intra-group communication in the mobile local area network group.

In a possible solution, the charging information of the member data connection session includes a group identifier, and the group identifier is an identifier of the mobile local area network group.

In a possible solution, if the charging information of the member data connection session includes first charging data and an intra-group forwarding manner, the first charging data includes usage of and/or a quota application amount for the member data connection session, and the intra-group forwarding manner is any one of the following: local switching forwarding, gateway tunnel forwarding, and data network forwarding.

In a possible solution, if the charging trigger device manages two or more user plane data gateways, and the local area network charging information includes charging information of an inter data gateway tunnel, the charging processing result includes a result of charging processing performed by the charging processing device on the charging information of the inter data gateway tunnel; and the inter data gateway tunnel is a data transmission tunnel between two user plane data gateways managed by the charging trigger device, and the charging information of the inter data gateway tunnel includes information about the inter data gateway tunnel.

In a possible solution, the charging information of the inter data gateway tunnel further includes second service indication information, and the second service indication information indicates that the inter data gateway tunnel is used for intra-group communication in the mobile local area network group.

In a possible solution, the charging information of the inter data gateway tunnel further includes a group identifier, and the group identifier is an identifier of the mobile local area network group.

According to a fifth aspect, an embodiment of this disclosure provides a charging processing device, configured to perform charging processing on a mobile local area network service. The charging processing device communicates with a charging trigger device, the mobile local area network service is a service that provides intra-group communication for a mobile local area network group, and the charging processing device includes a receiving module, a processing module, and a sending module;

the receiving module is configured to receive a charging request message from the charging trigger device, where the charging request message includes local area network charging information, and the local area network charging information is charging information related to the mobile local area network service;

the processing module is configured to perform charging processing on the local area network charging information to obtain a charging processing result; and

the sending module is configured to send a charging response message to the charging trigger device, where the charging response message includes the charging processing result.

In a possible solution, if the local area network charging information includes charging information of a member data connection session, the processing module is further configured to perform charging processing on the charging information of the member data connection session, where the charging processing result includes a result of charging processing performed by the processing module on the charging information of the member data connection session; and the member data connection session is a data connection session between a member user device in the mobile local area network group that uses the mobile local area network service and a corresponding user plane data gateway.

In a possible solution, if the charging information of the member data connection session includes first service indication information, the processing module is further configured to determine, based on the first service indication information, that the member data connection session is used for intra-group communication in the mobile local area network group.

In a possible solution, the processing module is further configured to perform, based on the first service indication information, authentication on whether the member user device can use the mobile local area network service.

In a possible solution, if the charging information of the member data connection session includes a group identifier, and the group identifier is an identifier of the mobile local area network group, and the processing module is further configured to:

determine, based on the group identifier, an account corresponding to the mobile local area network group; or

record the group identifier in a charging data record of the member data connection session; or

associate usage of members by using the group identifier as an association identifier and obtain usage of the mobile local area network group through accumulation; or

query, based on the group identifier, an external group identifier corresponding to the mobile local area network group, so as to perform charging processing on the charging information of the member data connection session based on the external group identifier.

In a possible solution, if the charging information of the member data connection session includes first charging data and an intra-group forwarding manner, the first charging data includes usage of and/or a quota application amount for the member data connection session, and the intra-group forwarding manner is any one of the following: local switching forwarding, gateway tunnel forwarding, and data network forwarding, the processing module is further configured to:

determine a charging rate of the first charging data based on the intra-group forwarding manner; or

record, in the charging data record of the member data connection session, the first charging data and the intra-group forwarding manner corresponding to the first charging data.

In a possible solution, if the local area network charging information includes charging information of an inter data gateway tunnel, before the sending module sends the charging response message to the charging trigger device, the processing module is further configured to perform charging processing on the charging information of the inter data gateway tunnel; and the inter data gateway tunnel is a data transmission tunnel between two user plane data gateways managed by the charging trigger device, and the charging information of the inter data gateway tunnel includes information about the inter data gateway tunnel.

In a possible solution, if the charging information of the inter data gateway tunnel further includes second service indication information, the processing module is further configured to determine, based on the second service indication information, that the inter data gateway tunnel is used for intra-group communication in the mobile local area network group.

In a possible solution, if the charging information of the inter data gateway tunnel further includes a group identifier, and the group identifier is an identifier of the mobile local area network group, the charging processing device is further configured to:

determine, based on the group identifier, an account corresponding to the mobile local area network group; or

record the group identifier in a charging data record of the inter data gateway tunnel; or

query, based on the group identifier, an external group identifier corresponding to the mobile local area network group, so as to perform charging processing on the charging information of the inter data gateway tunnel based on the external group identifier.

According to a sixth aspect, an embodiment of this disclosure provides a charging trigger device, including a processor and a memory.

The memory is configured to store program instructions.

The processor is configured to invoke the program instructions stored in the memory and execute the program instructions, so that the charging trigger device performs the charging processing method in any possible solution of the first aspect.

According to a seventh aspect, an embodiment of this disclosure provides a charging processing device, including a processor and a memory.

The memory is configured to store program instructions.

The processor is configured to invoke the program instructions stored in the memory and execute the program instructions, so that the charging processing device performs the charging processing method in any possible solution of the second aspect.

According to an eighth aspect, an embodiment of this disclosure provides a computer-readable storage medium, including instructions. When the instructions are run on a computer, the computer is enabled to perform the charging processing method corresponding to the first aspect, the second aspect, any possible solution of the first aspect, or any possible solution of the second aspect.

## BRIEF DESCRIPTION OF DRAWINGS

FIG. 1 is an architectural diagram of an existing communication system;

FIG. 2A is an architectural diagram of a first communication system according to an embodiment of this disclosure;

FIG. 2B is a schematic diagram of an intra-group forwarding manner according to an embodiment of this disclosure;

FIG. 3A is an architectural diagram of a second communication system according to an embodiment of this disclosure;

FIG. 3B is a flowchart of a first charging processing method according to an embodiment of this disclosure;

FIG. 3C is a flowchart of a second charging processing method according to an embodiment of this disclosure;

FIG. 4A is an architectural diagram of a third communication system according to an embodiment of this disclosure;

FIG. 4B is a schematic diagram of a first intra-group forwarding manner in a 5G local area network according to an embodiment of this disclosure;

FIG. 4C is a schematic diagram of a second intra-group forwarding manner in a 5G local area network according to an embodiment of this disclosure;

FIG. 4D is a schematic diagram of a third intra-group forwarding manner in a 5G local area network according to an embodiment of this disclosure;

FIG. 5A and FIG. 5B are a flowchart of a third charging processing method according to an embodiment of this disclosure;

FIG. 6 is a flowchart of a fourth charging processing method according to an embodiment of this disclosure;

FIG. 7A is a schematic diagram of first networking of a plurality of CHF devices according to an embodiment of this disclosure;

FIG. 7B is a schematic diagram of second networking of a plurality of CHF devices according to an embodiment of this disclosure;

FIG. 8 is a schematic diagram of hardware structures of a charging trigger device and a charging processing device according to an embodiment of this disclosure;

FIG. 9 is a schematic diagram of a logical structure of a charging processing device according to an embodiment of this disclosure; and

FIG. 10 is a schematic diagram of a logical structure of a charging trigger device according to an embodiment of this disclosure.

## DESCRIPTION OF EMBODIMENTS

The following describes the technical solutions in embodiments of this disclosure with reference to the accompanying drawings in embodiments of this disclosure.

In descriptions of this disclosure, "/" indicates an "or" relationship between associated objects unless otherwise specified. For example, A/B may indicate A or B. The term "and/or" in this disclosure indicates an association relationship for describing associated objects and indicates that three relationships may exist. For example, A and/or B may indicate the following three cases: Only A exists, both A and B exist, and only B exists, where A and B may be singular or plural. In addition, in descriptions of this disclosure, unless otherwise specified, "a plurality of" means two or more than two. In addition, to clearly describe the technical solutions in embodiments of this disclosure, terms such as first and second are used in embodiments of this disclosure to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

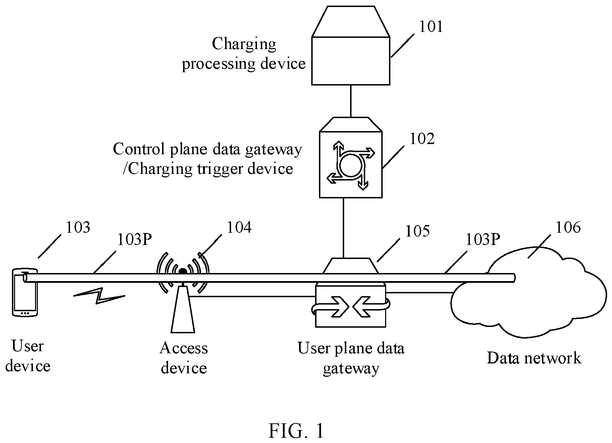

FIG. 1 is an architectural diagram of an existing communication system. The communication system includes a user device 103, a wireless access device 104, a user plane data gateway 105, a data network 106, a charging trigger device 102, and a charging processing device 101. The user device 103 sets up a data connection session 103P by using the user plane data gateway 105, to communicate with a server or another communication device in the data network 106. The charging trigger device 102 is jointly deployed with the control plane data gateway, collects usage (traffic or duration) information in the data connection session 103P of the user device 103, and sends the information to the charging processing device 101, so that the charging processing device 101 performs charging processing on the user device 103. In a charging processing method, data connection sessions of all user devices are independent of each other, and processes of creating charging resources and processing charging (including online charging and offline charging) are also independent of each other and do not interfere with each other.

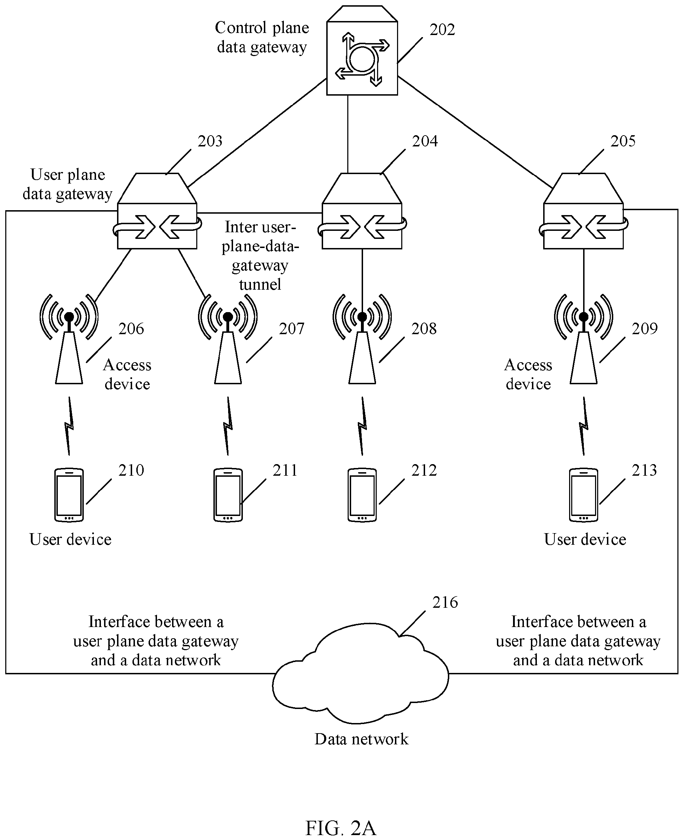

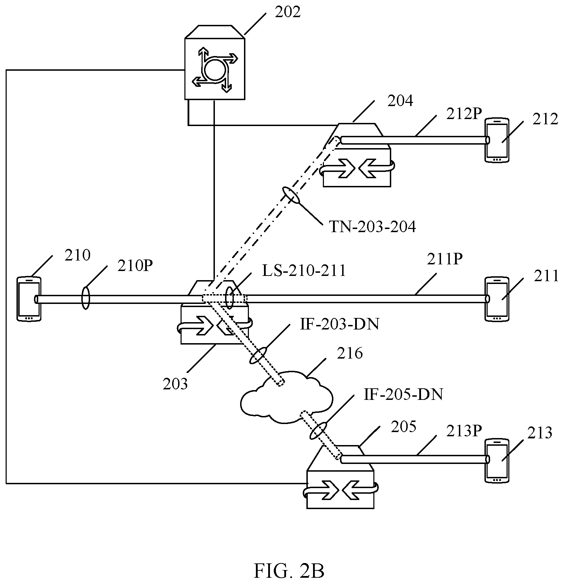

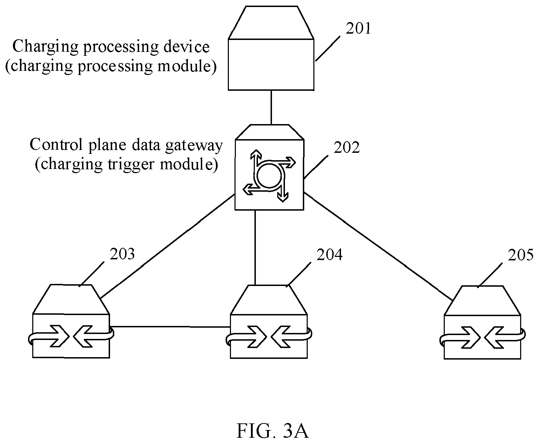

However, if being applied to a mobile local area network group, the charging processing method cannot meet diversified market requirements. The following describes an internal communication mechanism of the mobile local area network group with reference to FIG. 2A and FIG. 2B, and describes problems in the existing charging processing method. Further, with reference to FIG. 3A to FIG. 3C, how to perform charging processing on internal communication of the mobile local area network group is described.

FIG. 2A is an architectural diagram of a first communication system according to an embodiment of this disclosure. The communication system includes a control plane data gateway 202 and user plane data gateways 203 to 205 managed by the control plane data gateway 202, access devices 206 to 209, and member user devices 210 to 213 in the mobile local area network group. In addition, the communication system further includes another device, for example, an access management device. Details are not described one by one.

To help a person skilled in the art understand embodiments of this disclosure, the following briefly explains components and related concepts shown in FIG. 2A.

User device (user device): A user device is a device of a terminal user. The device may have a wireless communication capability, and may be connected to a wireless access device (for example, the access device 206) through an air interface. The device may also have a wired communication capability, and may be connected to a wired access device (for example, the access device 207) through a wired interface. In terms of a product form, the device may be a smartphone, a laptop (Laptop) computer with a wireless communication function, a tablet computer, a wearable device, an augmented reality (Augmented Reality, AR) device, an internet of things (Internet of Things, IoT) device, a desktop computer on a desk, or the like.

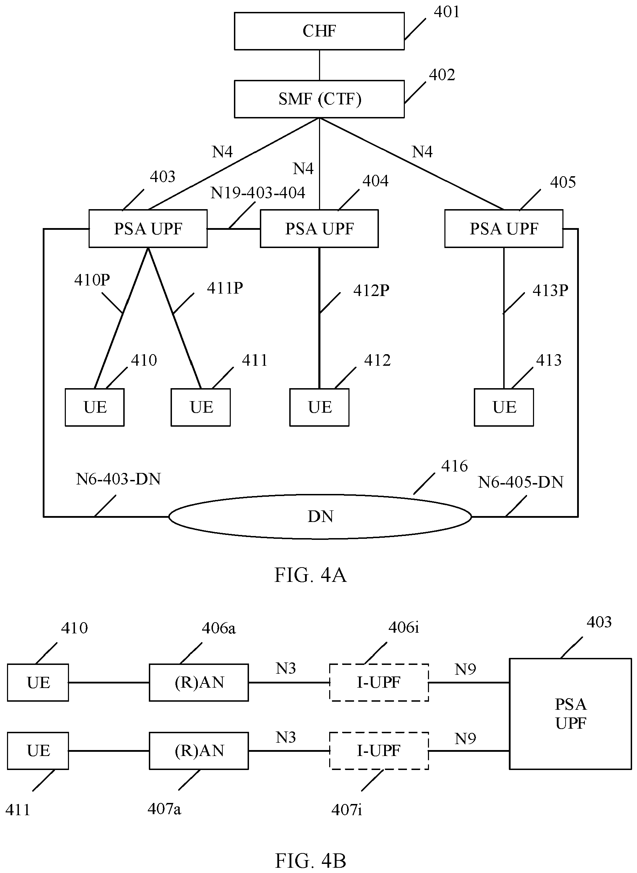

The user device may be user equipment (user equipment, UE) defined in a 3GPP standard specification, for example, UE 410 to UE 413 in FIG. 4A.

It can be noted that "connection" or "connected" in embodiments of this disclosure includes a direct connection or an indirect connection. The latter refers to a connection via one or more intermediate network devices. Details are not described again.

Data network (Data Network, DN): A data network is a network formed by using a data switch as a transfer point for data transmission, for example, an internet (internet), and includes an application server (not shown in FIG. 2A). Generally, a data network name (data network name, DNN) is used as an identifier of the data network.

Mobile local area network: A mobile local area network is a virtual local area network implemented based on a mobile communication network (for example, a 5G network), and mainly includes at least one user plane data gateway, such as the user plane data gateways 203 to 205 in FIG. 2A. Each user plane data gateway is connected to a control plane data gateway (For example, the user plane data gateways 203-205 are connected to the control plane data gateway 202), so as to be managed by the control plane data gateway. When the mobile local area network includes a plurality of user plane data gateways, different user plane data gateways are connected to each other (For example, the user plane data gateway 203 is connected to the user plane data gateway 204, and the user plane data gateway 203 is connected to the user plane data gateway 205 through a data network 216), to provide a service for communication between member user devices in the mobile local area network group. A plurality of mobile local area network groups may share a same user plane data gateway.

It can be understood that a topology relationship between the user plane data gateways in FIG. 2A is an example and is not a limitation. For example, the control plane data gateway may further trigger establishment of an inter data gateway tunnel between the user plane data gateway 204 and the user plane data gateway 205. In this way, a data packet sent by the user device 212 to the user device 213 does not need to be forwarded through the user plane data gateway 203 in a detour, but can be directly sent from the user plane data gateway 204 to the user plane data gateway 205.

It can be understood that, in some application scenarios, some user devices in the mobile local area network may also be a wired communication device, such as a desktop computer

The mobile local area network may be a 5G local area network (5G LAN-Virtual Network, 5G LAN VN) defined in a 3GPP standard specification. The 5G local area network may provide point-to-point data transmission between UE. Before the data transmission is performed, an association needs to be established between protocol data unit (protocol data unit, PDU) sessions of two pieces of UE. PDU sessions of all member UE in a same 5G local area network group may be managed and controlled by a same session management function (session management function, SMF) device, or may be managed and controlled by a plurality of SMF devices. In embodiments of this disclosure, the technical solutions are described by using an example in which the PDU sessions of all member UE in the same 5G local area network group are managed and controlled by the same SMF device. In a scenario in which the PDU sessions of all member UE are managed and controlled by the plurality of SMF devices, for a related operation of each SMF device, refer to embodiments of this disclosure. Data packet transmission between UE is performed according to a routing rule on a user plane function (user plane function, UPF) device, and the routing rule is delivered by the SMF device to the UPF device.

Mobile local area network group: A mobile local area network group is a set of member user devices that can access a mobile local area network. Each member user device in the set may be connected to a user plane data gateway of the user plane data gateway by using a respective access device. For example, the user device 210 is connected to the user plane data gateway 203 by using the access device 206. Based on a data switching or routing forwarding service of a user plane data gateway, different member user devices can communicate with each other in an IP type or non-IP type, and different member user devices in the set may be distributed in different geographical areas.

The member user devices in the mobile local area network group may be added or deleted. It is not all the case that all member user devices in the mobile local area network group access the mobile local area network at the same time. FIG. 2A shows an example of four member user devices that access the mobile local area network. It can be understood that, in an actual application, the member user devices in the mobile local area network group may access or leave the mobile local area network when required.

In embodiments of this disclosure, the mobile local area network group has two identifiers. One is an external group identifier, which is mainly used in a mobile network operator external system. The other is an internal group identifier, which is allocated by a unified data management (unified data management, UDM) device, and is mainly used in a mobile network operator internal system. The unified data management device establishes a mapping relationship between the external group identifier and the internal group identifier. Unless otherwise specified, a "group identifier" in embodiments of this disclosure refers to an internal group identifier of the mobile local area network group.

The mobile local area network group may be a 5G local area network group (5G LAN Group) defined in a 3GPP standard specification.

Intra-group communication: Intra-group communication, also referred to as "communication within a local area network" or "private communication", is communication between at least two member user devices in a mobile local area network group

Mobile local area network service: A mobile local area network service is a service that provides intra-group communication for member user devices in a mobile local area network group based on at least one user plane data gateway. A group identifier of the mobile local area network service is an identifier of the mobile local area network group. A 5G local area network type service (5G LAN-Type service) defined in the 3GPP standard specification is a mobile local area network service.

Usage: Usage is a quantity of transmitted or consumed service units reported to a charging processing device for charging processing within a specific time range. In embodiments of this disclosure, usage information includes a quantity of service units, a transmission direction, and the like, and the service unit may be traffic, duration, or the like.

Uplink traffic: Uplink traffic indicates a quantity of bytes that flow from a member user device to a user plane data gateway within a specific time range.

Downlink traffic: Downlink traffic indicates a quantity of bytes transmitted from a user plane data gateway to a member user device within a specific time range.

Intra-group communication mode: An intra-group communication mode is a data exchange manner between member user devices in a mobile local area network service. Specifically, there are at least the following three different intra-group communication modes:

(1) Unicast indicates communication between two member user devices, and is also referred to as "1:1 communication", "one-to-one communication", "point-to-point communication", or the like.
(2) Multicast indicates communication between one member user device and a plurality of other member user devices, that is, one member user device simultaneously sends a data packet to the plurality of member user devices. In implementation, a user plane data gateway distributes the data packet sent by the member user device to the plurality of other member user devices. Multicast is also referred to as "1:N communication", "one-to-many communication", "point-to-multipoint communication", or the like.
(3) Broadcast indicates communication between one member user device and all other member user devices that access a mobile local area network, that is, one member user device sends a data packet to all online member user devices in a mobile local area network group.

Control plane data gateway: A control plane data gateway is configured to: select a user plane data gateway for a member user device in a mobile local area network group to use a mobile local area network service, manage a data connection session of the member user devices, indicate the user plane data gateways to establish an inter user-plane-data-gateway tunnel, and deliver a data flow forwarding rule to the user plane data gateway.

The control plane data gateway may be a packet data network gateway for control plane (packet data network gateway for control plane, PGW-C) defined in the 3GPP standard specification or a session management function (session management function, SMF) device (for example, an SMF device 402 shown in FIG. 4A).

It can be understood that, in an actual application, a communication system may have a plurality of control plane data gateways, and each control plane data gateway may manage intra-group communication of a plurality of mobile local area networks.

Data connection session: A data connection session is an association (association) between a user device and a user plane data gateway, and is used to provide a connection service for communication between the user device and an accessed network or between the user device and another user device. A creation process of the data connection session may be initiated by the user device, and a removal process of the data connection session may be initiated by the user device, or may be initiated by another network device. In embodiments of this disclosure, the data connection session may also be briefly referred to as a "data session" or a "session"

The data connection session may be an IP-connectivity access network (IP-connectivity access network, IP-CAN) session or a protocol data unit session (protocol data unit session, PDU session) defined in the 3GPP standard specification (for example, a PDU session 410P in FIG. 4A); or may be a session in another form. This is not limited in embodiments of this disclosure.

The data connection session in embodiments of this disclosure refers to a data connection session that requires charging processing, and does not include a data connection session that is free of charge or does not require charging processing.

Mobile local area network data connection session: A mobile local area network data connection session indicates a data connection session for intra-group communication in a mobile local area network group, such as 210P to 213P in FIG. 2B. For ease of description, the mobile local area network data connection session is briefly referred to as an "intra-group session"t in embodiments of this disclosure.

QoS flow: A QoS flow indicates forwarding processing at a minimum granularity of QoS differentiation in a data connection session. Generally, a QoS flow identifier (QoS Flow identifier, QFI) is used to identify a QoS flow.

User plane data gateway: A user plane data gateway is a core network element that provides an intra-group communication service for a mobile local area network group, and is configured to create an intra-group session for a member user device in the mobile local area network group. For example, refer to FIG. 2B, under the management of a control plane data gateway 202, a user plane data gateway 203 sets up intra-group sessions 210P and 211P for user devices 210 and 211 respectively, a user plane data gateway 204 sets up an intra-group session 212P for a user device 212, and a user plane data gateway 205 sets up an intra-group session 213P for a user device 213. On this basis, in order to implement intra-group communication in the mobile local area network group, the user plane data gateway is further configured to forward a data packet between different intra-group sessions (for example, between the intra-group sessions 210P and 213P). For ease of description, in an embodiment of this disclosure, a way in which a data packet of an intra-group session is transmitted by a user plane data gateway of the intra-group session to another intra-group session is referred to as an intra-group forwarding manner of the intra-group session. For details, the user plane data gateway 203 is used as an example for further description. Refer to FIG. 2B.

The user plane data gateway may be a packet data network gateway for user plane (packet data network gateway for user plane, PGW-U) defined in the 3GPP standard specification or a PDU session anchor (PDU session anchor, PSA) user plane function (User Plane Function, UPF) device (for example, PSA UPFs 403 to 405 in FIG. 4A), or the like.

FIG. 2B is a schematic diagram of the intra-group forwarding manner according to this embodiment of this disclosure. The intra-group forwarding manner includes the following manners:

(1) Forwarding through a local data exchange service: Under the management of the control plane data gateway 202, the user plane data gateway 203 provides a local data exchange service LS-210-211, so that a data packet of the intra-group session 210P is forwarded to the intra-group session 211P or a data packet in the intra-group session 211P is forwarded to the intra-group session 210P. Therefore, the user device 210 can communicate with the user device 211. For ease of description, in embodiments of this disclosure, a way or means of forwarding data packets through a local data exchange service of a user plane data gateway between two intra-group sessions that belong to the same user plane data gateway is referred to as forwarding through a local data exchange service, which is briefly referred to as local switching forwarding.

(2) Forwarding through an inter data gateway tunnel: Under the management of the control plane data gateway 202, the user plane data gateway 203 interacts with the user plane data gateway 204 to establish an inter data gateway tunnel TN-203-204, so that a data packet of the intra-group session 210P is forwarded to the intra-group session 212P or a data packet in the intra-group session 212P is forwarded to the intra-group session 210P. Therefore, the user device 210 can communicate with the user device 212. For ease of description, in embodiments of this disclosure, a manner or means of forwarding, through an inter user-plane-data-gateway tunnel, data packets between two intra-group sessions (or a data service in the intra-group sessions) that respectively belong to the two user plane data gateways is referred to as forwarding through an inter data gateway tunnel, which is briefly referred to as gateway tunnel forwarding.

The inter data gateway tunnel may be an N19 tunnel (for example, an N19 tunnel N19-403-404 in FIG. 4A) defined in the 3GPP standard specification.

(3) Forwarding through a data network: Under the management of the control plane data gateway 202, a data packet in the intra-group session 210P is transmitted to a data network 216, and then forwarded by the data network 216 to the intra-group session 213P; or a data packet in the intra-group session 213P is transmitted to a data network 216, and then forwarded by the data network 216 to the intra-group session 210P. Therefore, the user device 210 can communicate with the user device 213. For ease of description, in embodiments of this disclosure, a manner or a means of forwarding data packets via a session between two user plane data gateways is referred to as forwarding through a gateway-network interface, which is briefly referred to as data network forwarding.

An interface between a user plane data gateway and a data network may be an N6 interface (N6 interfaces N6-403-DN and N6-405-DN in FIG. 4A) defined in the 3GPP standard specification.

It can be understood that, in an actual application, a mobile local area network may have more or fewer user plane data gateways, and a specific quantity is related to a quantity of user devices, geographical positions, and user requirements of a mobile local area network group, which belongs to the conventional technology.

For example, a mobile local area network may include devices such as a user plane data gateway 203, access devices 206 and 207, and user devices 210 and 211. In the local area network, there is only one user plane data gateway, and a local data exchange service, but no inter data gateway tunnel and no gateway-network interface.

For another example, a mobile local area network may include devices such as user plane data gateways 203 and 204, access devices 206 to 208, and user devices 210 to 212. In the local area network, there are two user plane data gateways, a local data exchange service, and an inter data gateway tunnel, but no gateway-network interface.

For still another example, a mobile local area network may include devices such as a user plane data gateway 203, a user plane data gateway 205, access devices 206 and 207, an access device 209, user devices 210 and 211, and a user device 213. In the local area network, there are two user plane data gateways, a local data exchange service, and a gateway-network interface, but no inter data gateway tunnel.

Access device: An access device can be a wireless access device or a wired access device. The wireless access device is usually an NG-RAN defined in the 3GPP standard specification, and includes but is not limited to an evolved NodeB (evolved NodeB, eNB) and a 5G base station (gNodeB, gNB).

The following uses the user device 210 as an example to describe an end-to-end transmission path of a data packet during intra-group communication, as shown in Table 1.

**Table 1**

| Endpoint <-> | <-> Data connection session <-> | <-> Forwarding through a user plane data gateway <-> | <-> Data connection session <-> | <-> Endpoint |
|---|---|---|---|---|
| 210 | 210P | LS-210-211 | 211P | 211 |
| 210 | 210P | TN-203-204 | 212P | 212 |
| 210 | 210P | IF-203-DN/IF-205-DN | 213P | 213 |

Meanings of data in Table 1 are explained as follows:

First row: When the user device 210 performs intra-group communication with the user device 211, the data packet is transmitted (unidirectionally or bidirectionally) between the user device 210, the data connection session 210P, the local data exchange service LS-210-211 of the user plane data gateway 203, the data connection session 211P, and the user device 211.

Second row: When the user device 210 performs intra-group communication with the user device 212, the data packet is transmitted (unidirectionally or bidirectionally) between the user device 210, the data connection session 210P, the tunnel TN-203-204 between the user plane data gateway 203 and the user plane data gateway 204, the data connection session 212P, and the user device 212.

Third row: When the user device 210 performs intra-group communication with the user device 213, the data packet is transmitted (unidirectionally or bidirectionally) between the user device 210, the data connection session 210P, the interface IF-203-DN between the user plane data gateway 203 and the data network, the interface IF-205-DN between the data network and the user plane data gateway 205, the data connection session 213P, and the user device 213.

In conclusion, compared with that in the communication system shown in FIG. 1, transmission of the data packet in the communication system shown in FIG. 2A has at least the following characteristics:

(a) The data packets transmitted by different user devices are related, and therefore their usage is also related. For example, when the user device 210 performs intra-group communication with the user device 211, an uplink data packet of the former finally becomes a downlink data packet of the latter, and uplink usage of the former is equal to downlink usage of the latter.

(b) The data packet of the user device passes through more segments in the operator communication network. For example, when the user device 210 performs intra-group communication with the user device 212, the data packet transmitted between the two user devices not only passes through data connection sessions 210P and 212P of the two user devices, but also passes through the inter data gateway tunnel TN-203-204, which requires an operator to invest additional network resources.

(c) The data packet of the user device is forwarded wider. For example, when an intra-group communication mode of the user device 210 is multicast or broadcast, the user plane data gateway 203 needs to forward the data packet sent by the user device 210 to a plurality of user devices, which also requires the operator to invest more network resources.

Therefore, if the charging processing method in the communication system shown in FIG. 1 is directly applied to the communication system shown in FIG. 2A, problems in at least the following three aspects exist.

(1) In the charging processing method shown in FIG. 1, whether usage of each member user device is used for intra-group communication or not can not be determined, therefore a corresponding charging rate can not be applied; and an identifier of a corresponding mobile local area network group can not be obtained, therefore, usage of different member user devices cannot be associated. In some charging requirement scenarios, this may lead to inaccurate charging. For example, when a charging requirement is charging by end-to-end transmission service, repeated charging is caused because, for same usage, charging processing is performed on one member user device (such as the user device 210) once, and charging processing is performed on another member user device (such as the user device 211) that performs intra-group communication with the user device again. This is because a correlation between the user devices cannot be determined.
(2) In the charging processing method shown in FIG. 1, charging processing can only be performed on usage of a session portion of each user device, but cannot be performed on usage of a forwarding portion. In some charging requirement scenarios, this also leads to inaccurate charging. For example, when charging is performed based on a network transmission service, due to lack of usage information in the forwarding phase, a charging result does not match contribution made by the operator to ensure QoS of intra-group communication, which is also represented as inaccurate charging.
(3) In the charging processing method shown in FIG. 1, no charging rate is determined based on an intra-group communication mode of each user device, which means that rating is based on a unicast charging rate by default.

Therefore, in embodiments of this disclosure, a charging trigger module and a charging processing module are added based on the communication system shown in FIG. 2. Functions of the charging trigger module and the charging processing module are respectively briefly described as follows:

Functions of the charging trigger module include but are not limited to: report local area network charging information (for example, information used to perform charging processing on intra-group communication in a mobile local area network group, for example, usage information related to intra-group communication and quota application information related to intra-group communication) to the charging processing module, and manage intra-group communication based on a local area network charging processing result (for example, a result of performing charging processing on the local area network charging information) returned by the charging processing module. These functions may be superimposed on a charging trigger function (Charging Trigger Function, CTF) defined in the 3GPP standard specification, or may be independent of the CTF to become a module or component such as a "mobile local area network charging trigger function".

Functions of the charging processing module include but are not limited to: perform charging processing on the local area network charging information reported by the charging trigger module, for example, perform operations such as account deduction and charging data record (Charging Data Record, CDR) generation based on the usage information related to intra-group communication, grant a corresponding quota based on the quota application information related to intra-group communication; and return the charging processing result to the charging trigger module, for example, indication information indicating successful usage processing, indication information indicating successful writing of a charging data record, and a granted quota. These functions may be superimposed on the CHF defined in the 3GPP standard specification, or may be independent of the CHF to become a module or component such as a "mobile local area network charging processing function". In addition, the charging processing module may further include a bill output function for outputting a bill for the mobile local area network group.

A deployment manner of the two modules is not limited in embodiments of this disclosure. For example, the two modules may be deployed in a manner shown in FIG. 3A, or may be deployed in another manner. For example, a plurality of functions included in the charging processing module are separately deployed on different physical devices. In a possible solution, the charging processing module may be deployed on an existing charging processing device that performs charging processing on a single user device, or may be deployed on a device specially configured to perform charging processing on a mobile local area network, for example, a "mobile local area network charging processing device".

FIG. 3A is an architectural diagram of a second communication system according to an embodiment of this disclosure. The communication system is obtained based on the communication system shown in FIG. 2A, where a charging trigger module is deployed on the control plane data gateway 202, and a charging processing device 201 including a charging processing module is added. The communication system includes a first charging processing system provided in embodiments of this disclosure, and is configured to perform charging processing on a mobile local area network service. The charging processing system includes the control plane data gateway 202 and the charging processing device 201. The control plane data gateway 202 provides charging information related to the mobile local area network service to the charging processing device 201, so that the charging processing device 201 performs charging processing on the mobile local area network service. It can be noted that both FIG. 2B and FIG. 3A are obtained based on FIG. 2A. To simplify a topology, an access device, a user device, a data network, and the like are hidden (not removed) in this embodiment of this disclosure.

For ease of description, in embodiments of this disclosure, devices that include a charging trigger module, such as the control plane data gateway 202 in FIG. 3A and an SMF device 402 in FIG. 4A, are generally referred to as a "charging trigger device"; and devices that include a charging processing module, such as the charging processing device 201 in FIG. 3A and a CHF device 401 in FIG. 4A, are generally referred to as a "charging processing device". A quantity of charging trigger devices and a quantity of charging processing devices in embodiments of this disclosure are an example, but are not a limitation. In an actual application, one communication system may include a plurality of charging trigger devices and a plurality of charging processing devices.

The following further describes an interaction procedure between the charging trigger device and the charging processing device with reference to specific content of the local area network charging information.

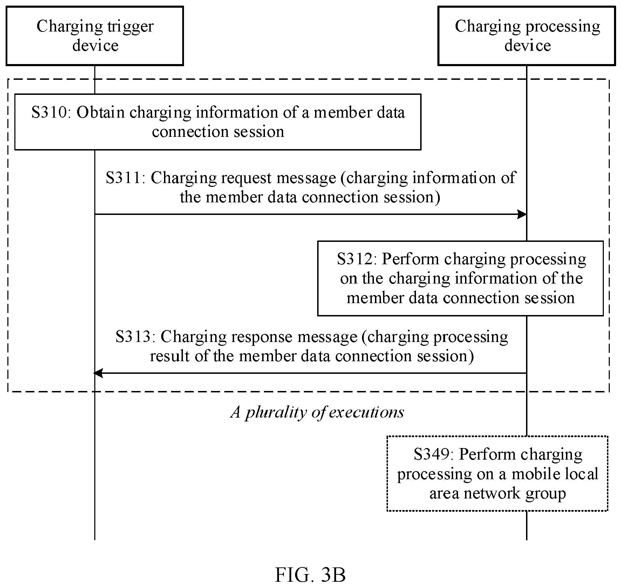

In a possible solution, the local area network charging information includes charging information of a member data connection session, the member data connection session is a data connection session of a member user device, and the member user device is a user device in a mobile communications local area network group. The interaction procedure between the charging trigger device and the charging processing device is shown in FIG. 3B.

FIG. 3B is a flowchart of a first charging processing method according to an embodiment of this disclosure. The charging processing method is used to perform charging processing on a mobile local area network service, and mainly includes the following steps.

Step 310: The charging trigger device obtains the charging information of the member data connection session.

Specifically, the charging trigger device constructs the charging information of the member data connection session or obtains the charging information of the member data connection session from a user plane data gateway when the charging report trigger condition is met, for example, when the data connection session is created or when a scheduled report time point is reached. The charging information includes one or more of the following:

(1) first charging data, including usage of and/or a quota application amount for the member data connection session;
(2) first service indication information, indicating that the data connection session of the member user device is used for intra-group communication;
(3) a group identifier, which is an internal group identifier of the mobile local area network group corresponding to intra-group communication;
(4) an intra-group forwarding manner, which is an intra-group forwarding manner corresponding to the first charging data; and
(5) an intra-group communication mode, that is, an intra-group communication mode of the member user device.

Optionally, the charging trigger device may send a charging trigger condition to a user plane data gateway. In this way, the user plane data gateway can send the information related to usage of the member data connection session to the charging trigger device when the charging trigger condition is met.

Step 311: The charging trigger device sends a charging request message to the charging processing device, where the request message includes the charging information of the member data connection session.

Specifically, the charging trigger device constructs the charging request message, where the request message carries the charging information of the member data connection session. In a scenario in which the charging processing device provides a service-oriented interface, the request message may be a charging resource creation request (ChargingResourceCreateRequest) message, a charging resource update request (ChargingResourceUpdateRequest) message, or a charging resource deletion request (ChargingResourceDeleteRequest) message.

Step 312: The charging processing device performs charging processing on the charging information of the member data connection session.

Specifically, the charging processing device receives the charging request message in the step 311, obtains the charging information of the member data connection session through parsing the charging request message, and then performs one or more of the following operations.

(1) The charging processing device determines, based on the first service indication information, that the data connection session of the member user device is used for intra-group communication, and then performs access authentication on the member user device, to be specific, authenticates whether the member user device can use the mobile local area network service, or determines whether the member user device is allowed to perform intra-group communication. Optionally, that the charging processing device may determine a charging rate based on the first service indication information, and then apply the charging rate to charging processing of the first charging data includes: The charging processing device performs account deduction on the usage based on the charging rate, performs account freezing based on the charging rate and the quota application amount, and writes the usage and the charging rate into a charging data record. Optionally, the charging processing device stores the first service indication information, for example, stores the first service indication information and an identifier of the data connection session of the member user device, or stores the first service indication information correspondingly to an identifier of a charging resource of the data connection session of the member user device.

(2) The charging processing device determines, based on the group identifier, an account corresponding to the mobile local area network group of the member user device, or records the group identifier in a charging data record of the member data connection session, or associates usage of members by using the group identifier as an association identifier and obtains the usage of the mobile local area network group through accumulation, or queries (for example, queries from a unified data management device), based on the group identifier, an external group identifier corresponding to the mobile local area network group, so as to perform charging processing on the charging information of the member data connection session based on the external group identifier (for example, the account is determined based on the external group identifier, or charging data records are associated to associate application layer charging information or customer information of the mobile local area network service. For another example, the external group identifier is recorded in the charging data record of the member data connection session). Optionally, the charging processing device stores the group identifier, for example, stores the group identifier correspondingly to an identifier of the member data connection session, or stores the group identifier correspondingly to an identifier of a charging resource of the member data connection session.

(3) The charging processing device performs charging processing on the first charging data based on the intra-group forwarding manner. For example, that the charging processing device applies a charging rate determined based on the intra-group forwarding manner corresponding to the first charging data to charging processing of the first charging data includes: The charging processing device performs account deduction on the usage based on the charging rate, and performs account freezing based on the charging rate and the quota application amount. For another example, the charging processing device records the first charging data and the corresponding intra-group forwarding manner in the charging data record of the member data connection session.

(4) The charging processing device performs charging processing on the first charging data based on the intra-group communication mode. For example, that the charging processing device applies a charging rate determined based on the intra-group communication mode to charging processing of the first charging data includes: The charging processing device performs account deduction on the usage based on the charging rate, and performs account freezing based on the charging rate and a quota application amount. For another example, the charging processing device records the intra-group communication mode in the charging data record of the member data connection session.

The charging processing device generates a charging processing result of the member data connection session based on the foregoing one or more operations. For example, the charging processing result includes an authentication result (authentication success indication information or authentication failure indication information), a granted quota, a usage deduction result (deduction success indication information or deduction failure indication information), and a result of writing the charging data record (indicating information indicating that writing the charging data record succeeds or indicating that writing the charging data record fails).

Step 313: The charging processing device sends a charging response message to the charging trigger device, where the response message includes the charging processing result of the member data connection session.

Specifically, the charging processing device constructs the charging response message, and sends the charging response message to the charging trigger device. The response message carries the charging processing result of the member data connection session. Then, the charging trigger device receives the charging response message.

The charging trigger device and the charging processing device may repeatedly perform a process similar to step 310 to step 313, so as to continuously perform charging processing on the data connection session of the member user device and perform charging processing on a data connection session of another member user device.

Step 349: The charging processing device performs charging processing on the mobile local area network group.

This step is optional. When a charging mode is offline charging, in the foregoing process, the charging processing device stores charging data records of data connection sessions of different member user devices in different time periods, and the charging processing device associates these charging data records based on the group identifier, to generate a charging data record of the mobile local area network group.

Specifically, within a preset time period, the charging processing device obtains previously generated charging data records of data connection sessions of mobile local area network member user devices, and performs an association operation on charging data records of data connection sessions of different member user devices or of a same user device, to obtain a summarized charging data record of mobile local area network. The association operation includes vertical association and horizontal association.

In vertical association, the charging processing device associates charging information of data connection sessions of a same member user device at different time points. Specifically, an identifier of the user device may be used as an association identifier.

In horizontal association, the charging processing device associates charging information of data connection sessions of different member user devices in a same mobile local area network group. Specifically, a group identifier may be used as an association identifier.

Optionally, the charging processing device may further trigger, based on the account deduction result, a user plane data gateway to control QoS of a data connection session of each member user device.

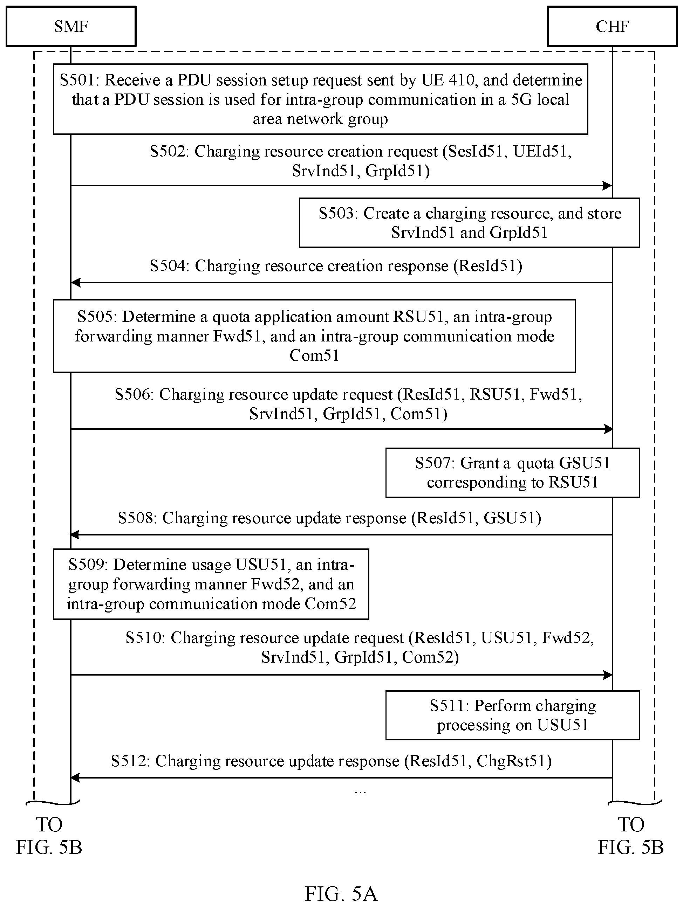

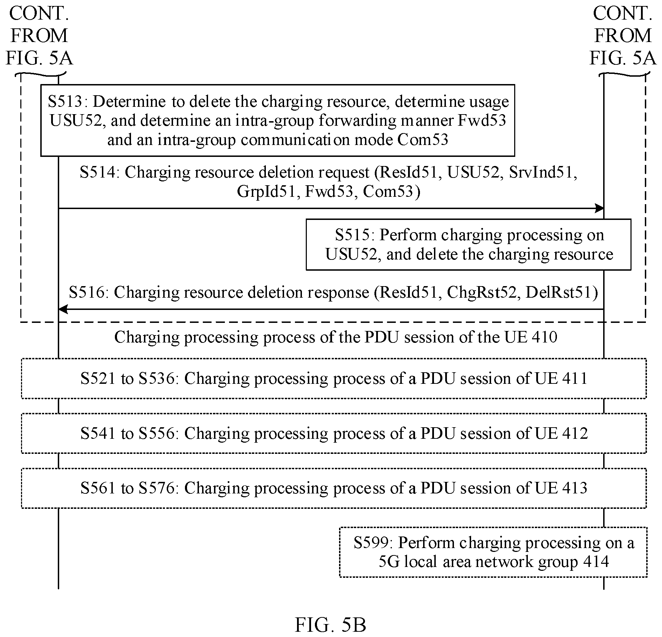

According to the charging processing method shown in FIG. 3B, the charging processing device can perform charging processing on the first charging data in the data connection session based on related information of the mobile local area network, and can perform refined charging processing on the mobile local area network service. This improves charging accuracy and flexibly supports a plurality of charging requirements. For details, refer to another embodiment of this disclosure, for example, a method corresponding to FIG. 5A and FIG. 5B.

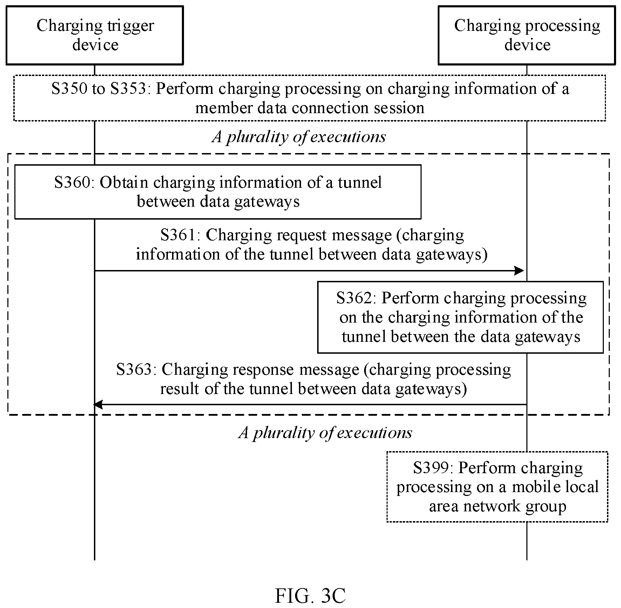

In another possible solution, in addition to charging information of a member data connection session, the local area network charging information further includes charging information of an inter data gateway tunnel (for example, the TN-203-204). In this case, the interaction procedure between the charging trigger device and the charging processing device is shown in FIG. 3C.

FIG. 3C is a flowchart of a second charging processing method according to an embodiment of this disclosure. The charging processing method is used to perform charging processing on a mobile local area network service, and mainly includes the following steps.

Step 350 to step 353: The charging trigger device and the charging processing device perform charging processing on the charging information of the member data connection session. This process is similar to the process of step 310 to step 313, and details are not described again. Based on a charging requirement, the process may not be performed in the method procedure.

Step 360: The charging trigger device obtains the charging information of the inter data gateway tunnel.

Specifically, the charging trigger device constructs the charging information of the inter data gateway tunnel or obtains the charging information of the inter data gateway tunnel from a user plane data gateway when a charging report trigger condition is met, for example, when the inter data gateway tunnel is created or when a scheduled report time point is reached. The charging information includes one or more of the following:

(1) second charging data, including usage transmitted through the inter data gateway tunnel;
(2) tunnel information, that is, information about the inter data gateway tunnel, for example, an identifier of the tunnel;
(3) second service indication information, indicating that the inter data gateway tunnel is used for intra-group communication;
(4) a group identifier, that is, an internal group identifier of a mobile local area network group corresponding to intra-group communication; and
(5) a transmission direction, that is, a direction in which a data packet corresponding to second charging data is transmitted in the inter data gateway tunnel.

Optionally, the charging trigger device may send a charging trigger condition to a user plane data gateway. In this way, the user plane data gateway can send the charging information of the inter data gateway tunnel to the charging trigger device when the charging trigger condition is met.

Step 361: The charging trigger device sends a charging request message to the charging processing device, where the request message includes the charging information of the inter data gateway tunnel.

Specifically, the charging trigger device constructs the charging request message, where the request message carries the charging information of the inter data gateway tunnel. In a scenario in which the charging processing device provides a service-based interface, the request message may be a charging resource creation request message, a charging resource update request message, or a charging resource deletion request message.

Step 362: The charging processing device performs charging processing on the charging information of the inter data gateway tunnel.

Specifically, the charging processing device receives the charging request message in step 361, obtains the charging information of the inter data gateway tunnel through parsing the charging request message, and then performs one or more of the following operations.

(1) The charging processing device determines, based on the tunnel information, that the charging request message includes the charging information of the inter data gateway tunnel (to distinguish from the charging information of the member data connection session).

(2) The charging processing device determines, based on the second service indication information, that the inter data gateway tunnel is used for intra-group communication, determines a charging rate corresponding to the inter data gateway tunnel, and then applies the charging rate to charging processing of the second charging data. Optionally, the charging processing device stores the second service indication information, for example, stores the second service indication information correspondingly to the identifier of the inter data gateway tunnel, or stores the second service indication information correspondingly to an identifier of a charging resource of the inter data gateway tunnel.

(3) The charging processing device determines, based on the group identifier, an account corresponding to the mobile local area network group served by the inter data gateway tunnel; or the charging processing device records the group identifier in a charging data record of the inter data gateway tunnel; or the charging processing device queries, based on the group identifier, an external group identifier corresponding to the mobile local area network group, so as to perform charging processing on the charging information of the inter data gateway tunnel based on the external group identifier (for example, the external group identifier is recorded in the charging data record of the inter data gateway tunnel). Optionally, the charging processing device stores the group identifier, for example, stores the group identifier correspondingly to the identifier of the inter data gateway tunnel, or stores the group identifier correspondingly to an identifier of a charging resource of the inter data gateway tunnel.

(4) The charging processing device performs charging processing on the second charging data based on the transmission direction. For example, in an account deduction process, a charging rate corresponding to the transmission direction is used (it is assumed that the charging rate varies with the transmission direction), or usage and the transmission direction are written into a charging data record, or the usage and the charging rate determined based on the transmission direction are written into a charging data record.

The charging processing device generates a charging processing result of the inter data gateway tunnel based on the foregoing one or more operations. For example, the charging processing result includes a granted quota, indication information indicating that the usage is successfully deducted, or indication information indicating that the usage is written into the charging data record.

Step 363: The charging processing device sends a charging response message to the charging trigger device, where the response message includes the charging processing result of the inter data gateway tunnel.

Specifically, the charging processing device constructs the charging response message, and sends the charging response message to the charging trigger device. The response message carries the charging processing result of the inter data gateway tunnel. Then, the charging trigger device receives the charging response message.

The charging trigger device and the charging processing device may repeatedly perform the process of step 360 to step 363, so as to continuously perform charging processing on the inter data gateway tunnel and perform charging processing on anoter inter data gateway tunnel in a mobile local area network.

Step 399: The charging processing device performs charging processing on the mobile local area network group.

This step is optional. When a charging mode is offline charging, in the foregoing process, the charging processing device stores charging data records of data connection sessions of different member user devices in different time periods and charging data records of tunnels between different data gateways in different time periods, and the charging processing device associates these charging data records based on the group identifier, to generate a charging data record of the mobile local area network group.

The charging processing device performs various association operations based on the group identifier, for example, associates charging data records of inter data gateway tunnels with the same group identifier.

For an operation of associating the charging data records of the data connection sessions of different member user devices, refer to related descriptions in step 349, and details are not described herein again.

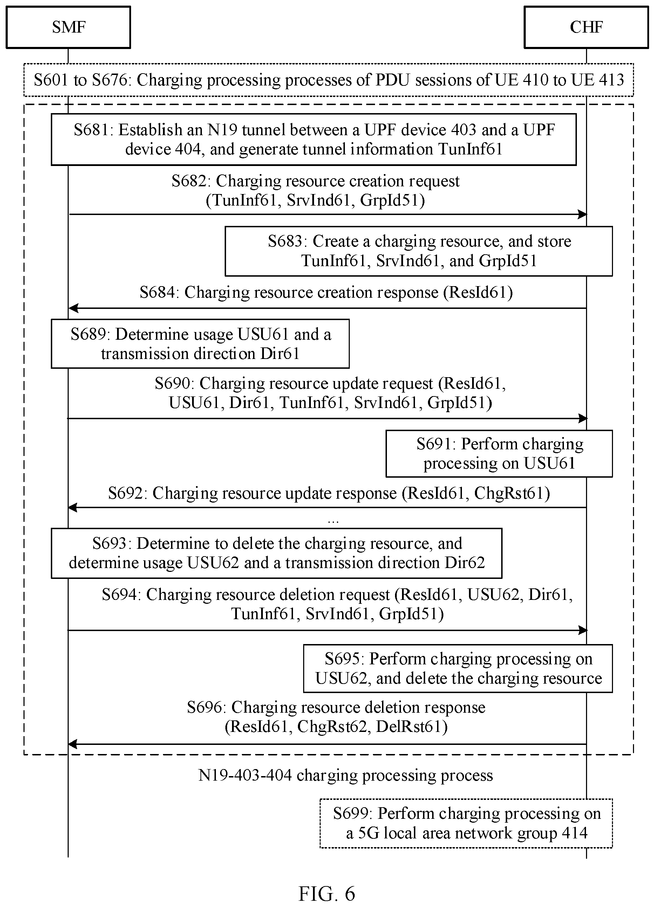

According to the charging processing method shown in FIG. 3C, the charging processing device can further perform charging processing on the second charging data of the inter data gateway tunnel based on related information of the mobile local area network. This can further improve charging accuracy and implement charging based on a used network resource. For details, refer to another embodiment of this disclosure, for example, a method procedure corresponding to FIG. 6.

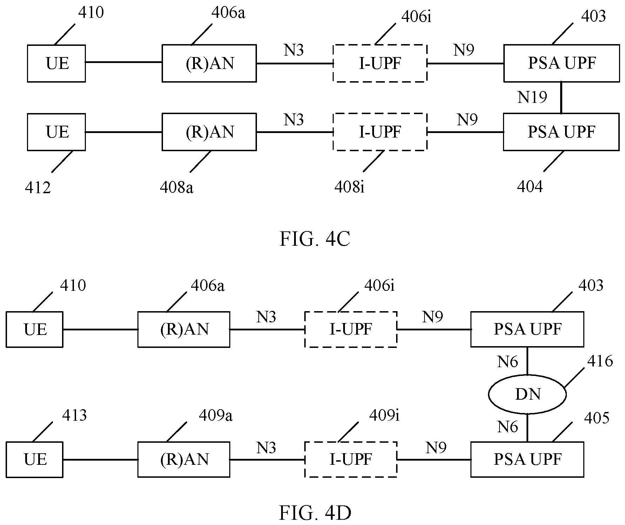

FIG. 4A is an architectural diagram of a third communication system according to an embodiment of this disclosure. The communication system includes a CHF device 401, an SMF device 402, and a 5G local area network managed by the SMF device 402. The 5G local area network includes PSA UPF devices 403 to 405, wireless access devices 406a to 409a (not shown in FIG. 4A), and a 5G local area network group. The 5G local area network group includes UE 410 to 413. The UE 410 and the UE 411 implement intra-group communication through a local switching forwarding service of the PSA UPF device 403, and for details, refer to related descriptions in FIG. 4B. The UE 410 and the UE 412 implement intra-group communication through an N19 tunnel N19-403-404 between the PSA UPF device 403 and the PSA UPF device 404, and for details, refer to related descriptions in FIG. 4C. The UE 410 and the UE 413 implement intra-group communication through an N6 interface N6-403-DN between the PSA UPF device 403 and a data network (Data Network, DN) 416 and an N6 interface N6-405-DN between the DN 416 and the PSA UPF device 405, and for details, refer to related descriptions in FIG. 4D. The SMF device 402 includes a CTF (equivalent to a charging trigger module), not only manages the 5G local area network, but also triggers the CHF device to perform charging processing on charging information of intra-group communication. Therefore, the CHF device 401 is equivalent to the charging processing device described above, and the SMF device 402 is equivalent to the charging trigger device described above. Therefore, the communication system includes a second charging processing system provided in embodiments of this disclosure, and is configured to perform charging processing on a 5G local area network service. The charging processing system includes the SMF device 402 and the CHF device 401.

In FIG. 4A, an N4 session is a session between the SMF device and a PSA UPF device, and the SMF device manages a PDU session and an N19 tunnel via the session. For ease of differentiation, in this embodiment of this disclosure, the N4 session used to manage the PDU session is referred to as a "common N4 session", and the N4 session used to manage the N19 tunnel is referred to as a "tunnel N4 session".

A topology structure of the 5G local area network shown in FIG. 4A is an example but not a limitation. In an actual application, one 5G local area network may include more or less PSA UPF devices and more or less UE, and connection relationships between the PSA UPF devices may also be different. For example, the PSA UPF device 404 may alternatively be connected to the PSA UPF device 405 through an N19 tunnel. In some scenarios, a "UPF device" is also referred to as a "UPF network element".

FIG. 4B is a schematic diagram of a first intra-group forwarding manner in the 5G local area network according to this embodiment of this disclosure. Both the UE 410 and the UE 411 belong to the PSA UPF device 403, and a data packet is forwarded between a PDU session of the UE 410 and a PDU session of the UE 411 through the local data exchange service of the PSA UPF device 403. In this way, a transmission path of the data packet for intra-group communication between the UE 410 and the UE 411 is UE 410 <-> (R) AN 406a <-> I-UPF device 406i <-> PSA UPF device 403 <-> I-UPF device 407i <-> (R)AN 407a <-> UE 411.

FIG. 4C is a schematic diagram of a second intra-group forwarding manner in the 5G local area network according to this embodiment of this disclosure. The UE 410 and the UE 412 respectively belong to the PSA UPF device 403 and the PSA UPF device 404, and a data packet is forwarded between the PDU session of the UE 410 and a PDU session of the UE 412 through the N19 tunnel between the PSA UPF device 403 and the PSA UPF device 404. In this way, a transmission path of the data packet for intra-group communication between the UE 410 and the UE 412 is UE 410 <-> (R) AN 406a <-> 1-UPF device 406i <-> PSA UPF device 403 <-> PSA UPF device 404 <-> I-UPF device 408i <-> (R)AN 408a <-> UE 412.

FIG. 4D is a schematic diagram of a third intra-group forwarding manner in the 5G local area network according to this embodiment of this disclosure. The UE 410 and the UE 413 respectively belong to the PSA UPF device 403 and the PSA UPF device 405, and a data packet is forwarded between the PDU session of the UE 410 and a PDU session of the UE 413 through the DN 416. In this way, a transmission path of the data packet for intra-group communication between the UE 410 and the UE 413 is UE 410 <-> (R) AN 406a <-> I-UPF device 406i <-> PSA UPF device 403 <-> DN 416 <-> PSA UPF device 405 <-> I-UPF device 409i <-> (R)AN 409a <-> UE 413.

FIG. 5A and FIG. 5B are a flowchart of a third charging processing method according to an embodiment of this disclosure. The charging processing method is used to perform charging processing on a 5G local area network service. Unless otherwise specified, an "SMF" refers to the SMF device 402 in FIG. 4A, a "CHF" refers to the CHF device 401 in FIG. 4A, a "5G local area network group" refers to the 5G local area network group in FIG. 4A, "UE" refers to the UE 410, a "UPF" refers to the PSA UPF device 403, and a "PDU session" refers to the PDU session 410P. The method procedure mainly includes the following steps.

Step 501: The SMF receives a PDU session setup request message sent by the UE, and determines that a PDU session is used for intra-group communication in a 5G local area network group.

Specifically, when a 5G local area network application on the UE runs, so that the UE needs to access a 5G local area network, the UE sends a first PDU session setup request message to an access management function (Access Management Function, AMF) device, to request to create a PDU session. Then, the AMF device sends a second PDU session setup request message to the SMF based on the received first PDU session setup request message. Examples of the two request messages are as follows:

```
        1stPDUSessionCreateRequest{//PDU session
setup request message sent by the UE to the AMF device
          "UEID": "UE410"//UEId51, identifier of the UE 410
          "DNN": "DNN415"//Dnn51, identifier of
 a data network corresponding to the 5G local area network
```

```
        "S-NSSAI": "S-NSSAI415"//S-nssai51,
identifier of a network slice corresponding to the 5G local area network }


        2ndPDUSessionCreateRequest{//PDU session setup
request message sent by the AMF device to the SMF
        "UEID": "UE410"//UEId51
        "SESID": "SES410P"//SesId51, identifier of the PDU session
        "DNN": "DNN415"//Dnn51, identifier of a data
 network corresponding to the 5G local area network
        "S-NSSAI": "S-NSSAI415"//S-nssai51, identifier
of a network slice corresponding to the 5G local area network
```

}"S-NSSAI" is single network slice selection assistance information (Single Network Slice Selection Assistance Information), and carries the identifier of the network slice corresponding to the 5G local area network.

Optionally, the UE may read Dnn51 and S-nssai51 from locally stored configuration information about the 5G local area network, to construct the first PDU session setup request message.

Specifically, the SMF receives the second PDU session setup request message, obtains UEID, Dnn51, and S-nssai51 through parsing, obtains subscription information of the UE through querying by using UEID, Dnn51, and S-nssai51 as query conditions from the unified data management device, and further determines, based on the subscription information, that the PDU session requested to be created is used for intra-group communication in the 5G local area network.

A process in which the SMF triggers the UPF to set up the PDU session is the conventional technology, and details are not described again.

Step 502: The SMF sends a charging resource creation request message to the CHF, where the request message carries SesId51, UEId51, SrvInd51, and GrpId51.

Specifically, the SMF constructs the charging resource creation request message (for example, ChargingDataRequest[Create] or ChargingResourceCreateRequest) and sends the charging resource creation request message to the CHF, to request the CHF to create a charging resource for the PDU session. The request message carries SesId51, UEId51, SrvInd51, and GrpId51, where SrvInd51 is first service indication information generated by the SMF, and indicates (indicates) that the PDU session is used for intra-group communication, GrpId51 is the identifier allocated by the SMF to the 5G local area network group, and both SrvInd51 and GrpId51 are optional.

An example of a charging resource creation request message is as follows:

```
        ChargingResourceCreateRequest {
            "UEID": "UE410'7/UEId51, identifier of UE
            "SESID": "SES410P"//SesId51, identifier of a PDU session
            "SRVIND": "For 5G LAN group comm"//SrvInd51, first service indication information
            "GRPID": "GRP414"//GrpldS1, group identifier
        }
```

}UEId51 is a 5G local area network group member identifier, and may be specifically a generic public subscription identifier (generic public subscription identifier, GPSI) and may also be a subscription permanent identifier (subscription permanent identifier, SUPI).

Step 503: The CHF creates the charging resource, and stores SrvInd51 and GrpId51.

Specifically, the CHF receives the charging resource creation request message, obtains SesId51, UEId51, SrvInd51, and GrpId51 through parsing, and further performs the following operations.

(1) Determine, based on SrvInd51, that the PDU session is used for intra-group communication. If the charging resource creation request message does not include SrvInd51, the CHF may query the subscription information of the UE based on UEId51, determine, based on the subscription information, that the PDU session is used for intra-group communication, and generate indication information SrvInd51.

(2) Optionally, perform access authentication on the UE, to determine that the UE is allowed to use an intra-group communication service provided by the 5G local area network. For example, the CHF may query the subscription information of the UE based on UEId51, and further determine whether the UE is allowed to use the intra-group communication service provided by the 5G local area network. For another example, the CHF searches, based on GrpId51, for an account corresponding to the 5G local area network group, and then determines, based on a balance status of the account, whether the UE is allowed to use the intra-group communication service provided by the 5G local area network. If the charging resource creation request message does not include GrpId51, the CHF may query the subscription information of the UE based on UEId51, and determine the identifier GrpId51 of the 5G local area network group based on the subscription information.

(3) Create the corresponding charging resource for the PDU session, and allocate the identifier ResId51 for the charging resource.

Optionally, the CHF further stores the foregoing received or determined SrvInd51 and the GrpId51, for example, stores SrvInd51 correspondingly to GrpId51, and ResId51.

Step 504: The CHF sends a charging resource creation response message to the SMF, where the response message carries ResId51.

Specifically, the CHF constructs the charging resource creation response message (for example, ChargingDataResponse[Create] or ChargingResourceCreateResponse), and sends the charging resource creation response message to the SMF, where the response message carries ResId51.

An example of a charging resource creation response message is as follows:

```
ChargingResourceCreateResponse {
    "RESID": "RES410P"//ResId51, identifier of a charging resource of a PDU session
```

}Correspondingly, the SMF receives the charging resource creation response message, and obtains ResId51 through parsing the response message. In this way, usage of the PDU session can be subsequently reported based on ResId51, and the SMF may also determine, based on the response message, that the access authentication on the UE succeeds. That is, the CHF allows the UE to perform intra-group communication based on network devices in the 5G local area network, and then delivers a charging rule to the UPF via a common N4 session (namely, an N4 session oriented to the PDU session, which is different from an N4 session oriented to the N19 tunnel), where the charging rule includes a packet detection rule (packet detection rule, PDR) and a usage reporting rule (usage reporting rule, URR). In a possible solution, the PDR and the URR indicate the UPF to detect and report usage of local forwarding, forwarding through an N6 interface, or forwarding through the N19 tunnel.

Step 505: The SMF determines a quota application amount RSU 51, an intra-group forwarding manner Fwd 51, and an intra-group communication mode Com 51.

Specifically, the SMF determines the quota application amount RSU 51 (for example, 5 M) based on local configuration information or a charging policy provided by a policy control device, to generate quota application information.

Optionally, the SMF further determines the intra-group forwarding manner Fwd51 of a data packet corresponding to the quota application amount RSU 51. Example values of the intra-group forwarding manner Fwd51 and corresponding meanings are as follows: Local indicates local forwarding through a PSA UPF, N19 indicates forwarding through an inter PSA-UPF tunnel N19, and N6 indicates forwarding through an inter PSA UPF- DN interface N6.

Optionally, the SMF further determines the intra-group communication mode Com51 of the UE. Example values of the intra-group communication mode Com51 and corresponding meanings are as follows: "Unicast" indicates unicast, "Multicast" indicates multicast, and "Broadcast" indicates broadcast.

Step 506: The SMF sends a charging resource update request message to the CHF, where the request message includes ResId51, RSU51, SrvInd51, GrpId51, Fwd51, and Com51.

Specifically, the SMF constructs the charging resource update request message (for example, ChargingDataRequest[Update] or ChargingResourceUpdateRequest) based on the quota application amount RSU 51 determined in step 505, and sends the charging resource update request message to the CHF, so as to request the CHF to update the charging resource for the PDU session, where the request message includes ResId51, RSU51, Fwd51, SrvInd51, GrpId51, and Com51.

An example of a charging resource update request message is as follows:

```
ChargingResourceUpdateRequest{
    "RESID": "RES410P"//ResId51, identifier of
a charging resource corresponding to a PDU session
    "RSU-INF" {//quota application information
        "RG": "RG51 "//RG51, identifier of a charging rate group in the PDU session
        "RSU": 5//RSU51, indicating that
a quota application amount is 5 megabits (MB)
        "FWD": "Local"//Fwd51, indicating that an
intra-group forwarding manner is local forwarding through a
        PSA UPF
        "OTHER": "..."//other description
information of the quota application amount
    }
```

```
"SRVIND": "For 5G LAN group comm"//SrvInd51, first service indication information
"GRPID": "GRP414"//GrpId51, group identifier
"COMTYP": "Multicast"//Com51, intra-group communication mode
}
```

A parallel relationship between RSU 51 and Fwd 51 in the charging resource update request message is merely an example, but is not a limitation. In an actual application, another structural relationship may be used. For example, Fwd 51 may be placed outside an RSU-INF data structure, and juxtaposed with SrvInd51, or the like.

If the CHF already stores SrvInd51 and GrpId51 in step 503, optionally, to avoid information redundant transmission, the charging resource update request message may not include SrvInd51 and GrpId51.

Corresponding to step 505, in a possible technical solution, the charging resource update request message may either not include Fwd51 and Com51.

Step 507: The CHF grants a quota GSU 51 corresponding to the quota application amount RSU 51.

Specifically, the CHF receives the charging resource update request message in step 506, and obtains ResId51, RSU51, Fwd51, SrvInd51, GrpId51, and Com51 through parsing from the message, and then grants the quota GSU 51 corresponding to RSU 51.

Specifically, the CHF may perform rating based on any one or any combination of Fwd51, SrvInd51, GrpId51, and Com51, and further grant the corresponding quota GSU 51. The CHF may further determine, based on GrpId51, an account corresponding to the 5G local area network group, and use the account in a process of granting the corresponding quota GSU 51 based on RSU 51.

If the received charging resource update request message does not include SrvInd51 or GrpId51, the CHF may obtain the previously stored SrvInd51 or GrpId51 locally based on ResId51.

Step 508: The CHF sends a charging resource update response message to the SMF, where the response message includes ResId51 and GSU51.

Specifically, the CHF constructs the charging resource update response message (for example, ChargingDataResponse[Update] or ChargingResourceUpdateResponse), and sends the charging resource update response message to the SMF, where the charging resource update response message includes ResId51 and the GSU51.

An example of a charging resource update response message is as follows:

```
ChargingResourceUpdateResponse {
    "RESID": "RES410P"//ResId51, identifier of a charging resource of a PDU session
    "GSU-INF" {//granted quota information
        "RG": "RG51 "//RG51, identifier of a charging rate group in the PDU session
        "GSU": "5M"//GSU51, indicating that a granted quota amount is 5 megabits (MB)
    } }
```

Correspondingly, the SMF receives the charging resource update response message, obtains ResId51 and GSU51 through parsing the response message, and manages use of GSU51, that is, manages consumption of GSU51 by the PDU session. In a possible solution, the SMF sends GSU51 to the UPF, and the UPF manages consumption of GSU51 by the PDU session.

It can be noted that if a charging mode of the PDU session is offline charging, the SMF and the CHF do not perform a process (namely, a process of applying for a quota) of step 505 to step 508.

Step 509: The SMF determines usage USU51, an intra-group forwarding manner Fwd52, and an intra-group communication mode Com52.

Specifically, the SMF obtains the usage USU51, the corresponding intra-group forwarding manner Fwd52, and the intra-group communication mode Com52. Fwd52 may be the same as or different from Fwd51, and Com52 may be the same as or different from Com51.

The SMF may obtain the usage USU51 via the common N4 session. For example, the SMF generates a corresponding PDR and a corresponding URR based on a policy and charging control (Policy and Charging Control, PCC) rule, and sends the PDR and the URR to the UPF via the common N4 session. The UPF reports the usage USU51 corresponding to the URR via the common N4 session.

Step 510: The SMF sends a charging resource update request message to the CHF, where the request message includes ResId51, USU51, Fwd52, SrvInd51, GrpId51, and Com52.

Specifically, the SMF constructs the charging resource update request message based on USU51, Fwd52, and Com 52 determined in step 509, and sends the charging resource update request message to the CHF, where the request message includes ResId51, USU51, Fwd52, SrvInd51, GrpId51, and Com52.

An example of a charging resource update request message is as follows:

```
ChargingResourceUpdateRequest{
    "RESID": "RES410P"//ResId51, identifier of a charging resource of a PDU session
    "USU-INF" {//usage information
        "RG": "RG51 "//RG51, identifier of a charging rate group in the PDU session
        "UL-USU": 4//USU51, indicating that uplink usage is 4 megabits (MB)
        "DL-USU": 2//USU51, indicating that downlink usage is 2 megabits (MB)
        "FWD": "N19"//Fwd52, indicating
that intra-group forwarding manner is forwarding through an inter PSA
        UPF tunnel N19.
        "OTHER": "..."//other description information about the usage
    }
    "SRVIND": "For 5G LAN group comm"//SrvInd51, first service indication information
    "GRPID": "GRP414"//GrpId51, group identifier
    "COMTYP": "Multicast"//Com52, intra-group communication mode }
```

A parallel relationship between USU51 and Fwd52 in the charging resource update request message is merely an example, but is not a limitation. In an actual application, another structural relationship may be used. For example, Fwd52 may be placed outside a USU-INF data structure, and juxtaposed with SrvInd51, or the like.

In addition, if the CHF already stores SrvInd51 and GrpId51 in step 503, optionally, to avoid redundant transmission of information, the charging resource update request message may not include SrvInd51 and GrpId51 .

In a possible technical solution, the charging resource update request message may either not include Fwd52 and Com52.

In a possible technical solution, RG 51 may be replaced with an identifier of a data connection service at another granularity in the PDU session, for example, an identifier of a QoS flow.

Step 511: The CHF performs charging processing on USU51.

Specifically, the CHF receives the charging resource update request message in step 510, obtains ResId51, USU51, Fwd52, SrvInd51, GrpId51, and Com52 through parsing, and then performs charging processing on USU51.

Specifically, the CHF may determine a charging rate based on any one or any combination of Fwd52, SrvInd51, GrpId51, and Com52, and determine, based on GrpId51, an account corresponding to the 5G local area network group. If the charging mode is online charging, the CHF performs account deduction on the determined account based on the determined charging rate and USU51; or if the charging mode is offline charging, the CHF records any one or any combination of Fwd52, SrvInd51, GrpId51, and Com52 and USU51 in a charging data record of the PDU session.

If the received charging resource update request message does not include SrvInd51 or GrpId51, the CHF may obtain the previously stored SrvInd51 and GrpId51 locally based on ResId51.

Optionally, the CHF may obtain total usage of the 5G local area network group by accumulating in this step or in a subsequent step by using GrpId51 as an association identifier. The total usage may be used to control QoS of intra-group communication in the 5G local area network group, for example, perform QoS control on PDU sessions. For example, if "GRPID" values in a plurality of ChargingResourceUpdateRequests received by the CHF are all "GRP414", the CHF accumulates usage in the PDU sessions in these ChargingResourceUpdateRequests, to obtain the usage of the 5G local area network group.

Step 512: The CHF sends a charging resource update response message to the SMF, where the response message includes ResId51 and a charging processing result ChgRst51.

Specifically, the CHF constructs the charging resource update response message, and sends the charging resource update response message to the SMF, where the charging resource update response message includes ResId51 and the charging processing result ChgRst51. Example values of the charging resource update response message and corresponding meanings are as follows: SucInDeduction indicates that account deduction succeeds, and SucInRecording indicates that writing of the charging data record succeeds.

An example of a charging resource update response message is as follows:

```
ChargingResourceUpdateResponse {
    "RESID": "RES410P"//ResId51, identifier of a charging resource of a PDU session
    "CHGRST": "SucInDeduction" "SucInRecording" //ChgRst51
```

}Correspondingly, the SMF receives the charging resource update response message, obtains the charging processing result through parsing the response message, and manages the PDU session based on the charging processing result, for example, keeps allowing the PDU session to pass for continuity of the intra-group communication service of the UE.

It can be understood that a process between step 505 to step 512 may be repeatedly performed until it is determined that the PDU session is to be released, and step 513 is performed.

Step 513: The SMF determines to delete a charging resource, determines usage USU52, and determines an intra-group forwarding manner Fwd53 and an intra-group communication mode Com53.

Specifically, the SMF receives a PDU session release request message sent by the UE or another device (for example, a PCF device), and determines, based on the request message, that the CHF needs to be triggered to delete the previously created charging resource. Because there is unreported usage, the SMF obtains the usage USU52 (it is assumed that the usage is 3 M), the corresponding intra-group forwarding manner Fwd53, and the intra-group communication mode Com53 before the PDU session is released. Fwd53 may be the same as or different from Fwd51 or Fwd52, and Com53 may be the same as or different from Com52 or Com51. For a manner in which the SMF obtains USU52, refer to related descriptions in step 510, and details are not described herein again.

Step 514: The SMF sends a charging resource deletion request message to the CHF, where the request message includes ResId51, USU52, Fwd53, SrvInd51, GrpId51, and Com53.

Specifically, the SMF constructs the charging resource deletion request message based on USU52, Fwd53, and Com53 determined in step 513, and sends the charging resource deletion request message to the CHF, to request the CHF to delete the charging resource for the PDU session, where the request message includes ResId51, USU52, Fwd53, SrvInd51, GrpId51, and Com53.

An example of a charging resource deletion request message is as follows:

```
ChargingResourceDeleteRequest {
    "RESID": "RES410P"//ResId51, identifier of a charging resource of a PDU session
    "USU-INF" {//usage information
        "RG": "RG51 "//RG51, identifier of a charging rate group in the PDU session
        "USU":3//USU52, indicating that usage is 3 megabits (MB)
        "FWD": "N6"//Fwd53, indicating
forwarding through an inter UPF-DN interface N6
        "OTHER": "..."//other description information about the usage
    }
    "SRVIND": "For 5G LAN group comm"//SrvInd51, first service indication information
    "GRPID": "GRP414"//GrpId51, group identifier
    "COMTYP": "Unicast"//Com53, intra-group communication mode }
```

Similarly, the charging resource deletion request message may not include SrvInd51 and GrpId51.

In a possible technical solution, the charging resource deletion request message may either not include Fwd53 and Com53.

Step 515: The CHF performs charging processing on USU52, and deletes the charging resource.

Specifically, the CHF receives the charging resource deletion request message in step 514, obtains ResId51, USU52, Fwd53, SrvInd51, GrpId51, and Com53 through parsing, and then performs charging processing on USU53. For details, refer to related descriptions in step 511.

If the received charging resource deletion request message does not include SrvInd51 or GrpId51, the CHF may obtain the previously stored SrvInd51 and GrpId51 locally based on ResId51.

After completing charging processing on USU52, the CHF deletes the previously created charging resource corresponding to ResId51, so as to reclaim a computing resource, such as a memory resource or a CPU resource, on the CHF occupied by the charging resource.

Step 516: The CHF sends a charging resource deletion response message to the SMF, where the response message includes ResId51, a charging processing result ChgRst 52, and a charging resource deletion result DelRst 51.

Specifically, the CHF constructs the charging resource deletion response message, and sends the charging resource deletion response message to the SMF, where the charging resource deletion response message includes ResId51, the charging processing result ChgRst52, and the resource deletion result DelRst51. Example values of ChgRst52 and corresponding meanings are the same as those of ChgRst51, and details are not described again. An example value of DelRst51 and a corresponding meaning are as follows: "SucInDeleting" indicates that the charging resource corresponding to the PDU session is successfully deleted.

An example of a charging resource deletion response message is as follows:

```
ChargingResourceDeleteResponse {
    "RESID": "RES410P"//ResId51, identifier of a charging resource of a PDU session
    "CHGRST": "SucInDeduction"|"SucInDeleting"//ChgRst52
    "DELRST": "SucInDeleting"//DelRst51
```

}Correspondingly, the SMF receives the charging resource deletion response message, obtains ChgRst52 and DelRst51 through parsing, and manages the PDU session accordingly, for example, releases the PDU session, to terminate the intra-group communication service of the UE.

In a possible solution, the SMF may determine RSU51 and/or USU51 before step 502, so that the charging resource creation request message in step 502 carries RSU51 and/or USU51. Therefore, in step 504, the SMF obtains GSU51 and/or ChgRst51 from the charging resource creation response message sent by the CHF.

The foregoing steps 501 to 516 are a charging processing process of intra-group communication of the UE 410. Optionally, the method procedure may further include a charging processing process of intra-group communication of another UE in the 5G local area network group. Examples are as follows.

Steps 521 to 536 correspond to a charging processing process of intra-group communication of the UE 411.

Optionally, the SMF triggers the CHF to perform charging processing on intra-group communication of the UE 411. For details, refer to the process of steps 501 to 516.

Steps 541 to 556 correspond to a charging processing process of intra-group communication of the UE 412.

Optionally, the SMF triggers the CHF to perform charging processing on intra-group communication of the UE 412. For details, refer to the process of steps 501 to 516.

Steps 561 to 570 correspond to a charging processing process of intra-group communication of the UE 413.

Optionally, the SMF triggers the CHF to perform charging processing on intra-group communication of the UE 413. For details, refer to the process of steps 501 to 516.

It can be understood that a sequence of the foregoing charging processing processes of intra-group communication of the plurality of UE is not fixed, and may be different from the foregoing sequence, and charging processing processes of intra-group communication of different UE may also be performed in parallel.

Step 599: The CHF performs charging processing on the 5G local area network group.

When the charging mode of the PDU session is the offline charging, in the foregoing process, the CHF stores the charging data records of the PDU sessions of different UE in different time periods, and the CHF device associates USU in these charging data records based on GrpId51, and outputs bills for the 5G local area network group. Examples are as follows.

It is assumed that an intra-group communication status is as follows.

(1) The UE 410 performs intra-group communication with the UE 411, the UE 412, and the UE 413 in a broadcast manner, the data packet transmitted in the PDU session (410P) is 5 M, and the forwarding manner includes the local switching forwarding, the forwarding through the N19 tunnel, and the forwarding through the N6 interface.

(2) The UE 411 performs intra-group communication with the UE 410 and the UE 412 in a multicast manner, the data packet transmitted in the PDU session (411P) is 3 M, and the forwarding manner includes the local switching forwarding or the forwarding through the N19 tunnel.

(3) The UE 412 performs intra-group communication with the UE 411 in a unicast manner, the data packet transmitted in the PDU session (412P) is 2 M, and the forwarding manner includes the forwarding through the N19 tunnel.

(4) The UE 413 performs intra-group communication with the UE 411 in a unicast manner, the data packet transmitted in the PDU session (413P) is 1 M, and the forwarding manner includes the forwarding through the N6 interface.

In a specific period, charging information written by the CHF into the charging data record is shown in Table 2, and the charging information is associated with each other by using a common group identifier "GRP414".

**Table 2**

| Number | Group identifier | UE | Usage | Direction | Intra-group forwarding manner | Intra-group communication mode |
|--------|------------------|-----|-------|-----------|-------------------------------|--------------------------------|
| 1 | GRP414 | 410 | 5M | UL | Local | Broadcast |
| 2 | GRP414 | 411 | 5M | DL | Local | - |
| 3 | GRP414 | 410 | 5M | UL | N19 | Broadcast |
| 4 | GRP414 | 412 | 5M | DL | N19 | - |
| 5 | GRP414 | 410 | 5M | UL | N6 | Broadcast |
| 6 | GRP414 | 413 | 5M | DL | N6 | - |
| 7 | GRP414 | 411 | 3M | UL | Local | Multicast |

(continued)

| Number | Group identifier | UE | Usage | Direction | Intra-group forwarding manner | Intra-group communication mode |
|---|---|---|---|---|---|---|
| 8 | GRP414 | 410 | 3M | DL | Local | - |
| 9 | GRP414 | 411 | 3M | UL | N19 | Multicast |
| 10 | GRP414 | 412 | 3M | DL | N19 | - |
| 11 | GRP414 | 412 | 2M | UL | N19 | Unicast |
| 12 | GRP414 | 411 | 2M | DL | N19 | - |
| 13 | GRP414 | 413 | 1M | UL | N6 | Unicast |
| 14 | GRP414 | 411 | 1M | DL | N6 | - |

"UL" indicates uplink, "DL" indicates downlink, "Local" indicates local switching forwarding, "N19" indicates forwarding through an N19 tunnel, and "N6" indicates forwarding through an N6 interface. It is assumed that an operator sets a local charging rate to R, an N6 charging rate to 2R, and an N19 charging rate to 3R.

If charging is performed based on end-to-end usage, the CHF charges uplink usage, that is, charges the usage numbered 1, 3, 5, 7, 9, 11, and 13 in Table 2, and obtains the following fee:

$$5M*R + 5M*3R + 5M*2R + 3M*R + 3M*3R + 2M*3R + 1M*2R = 50MR$$

If charging is performed based on N19 tunnel usage, the CHF charges the N19 tunnel usage, that is, charges the usage corresponding to the intra-group forwarding manner "N19" in Table 2, and obtains the following fee:

$$5M*3R*2 + 3M*3R*2 + 2M*3R*2 = 60MR$$

FIG. 6 is a flowchart of a fourth charging processing method according to an embodiment of this disclosure. The charging processing method is used to perform charging processing on a 5G local area network service. Unless otherwise specified, an "SMF" refers to the SMF device 402 in FIG. 4A, a "CHF" refers to the CHF device 401 in FIG. 4A, a "5G local area network group" refers to the 5G local area network group in FIG. 4A, a "UPF 403" refers to the PSA UPF device 403, and a "UPF 404" refers to the PSA UPF device 404. The method procedure mainly includes the following steps.

Step 601 to step 676 correspond to charging processing processes of PDU sessions of the UE 410 to the UE 413. These processes are similar to the process of step 501 to step 576, and details are not described again. According to a charging requirement, the process may not be performed in the method procedure.

Step 681: The SMF establishes an N19 tunnel between the UPF device 403 and the UPF device 404, and generates tunnel information TunInf61.

Specifically, the SMF determines, based on configuration information of a 5G local area network, that the N19 tunnel needs to be established between the UPF device 403 and the UPF device 404, to support intra-group communication in the 5G local area network, and then separately delivers instruction information for establishing the N19 tunnel to the UPF device 403 and the UPF device 404, to trigger interaction between the UPF device 403 and the UPF device 404 and establish the N19 tunnel.

Further, the SMF generates the tunnel information TunInf61, where the tunnel information includes at least an identifier TEId61 allocated by the SMF to the N19 tunnel.

Management of the SMF and charging information report of the N19 tunnel are further explained as follows.

Specifically, if the SMF device manages two UPF devices (for 5G local area network communication), in other words, a UPF device set in the 5G local area network includes two UPF devices, it is assumed that the N19 tunnel is established between the two UPF devices, the SMF device requests the CHF to create a dedicated charging resource for the N19 tunnel. When generating charging information of the N19 tunnel, the SMF device may obtain the charging information of the N19 tunnel from any UPF device of the two UPF devices; or may separately obtain charging information of the N19 tunnel from the two UPF devices, and combine and deduplicate the charging information of the N19 tunnel to obtain the summarized charging information of the N19 tunnel.

Specifically, if the SMF device manages more than two UPF devices (for 5G local area network communication), in other words, a UPF device set in the 5G local area network includes more than two UPF devices, it is assumed that the N19 tunnel is established between any two UPF devices, in this case, a same UPF establishes the N19 tunnels with a plurality of UPF devices at the same time, in other words, the SMF device may manage a plurality of N19 tunnels, the SMF device may request the CHF to create a corresponding charging resource for each N19 tunnel, or request the CHF to create a common charging resource for all the N19 tunnels. A method for generating charging information for each N19 tunnel is the same as that in the foregoing paragraph, and details are not described again.

It can be understood that, in a scenario of creating the dedicated charging resource for the N19 tunnel, a charging resource creation method corresponding to the PDU session is the same as the method procedure corresponding to FIG. 5A and

FIG. 5B. Optionally, after the charging resource corresponding to the PDU session is created, the PDR and the URR (usage reporting rule, usage reporting rule) delivered by the SMF to the UPF device via the common N4 session include only charging rules for the local switching forwarding and the forwarding through the N6 interface, and does not include a charging rule for the forwarding through the N19 tunnel. The PDR and the URR delivered to the UPF device via the tunnel N4 session include the charging rule for the forwarding through the N19 tunnel.

Step 682: The SMF sends a charging resource creation request message to the CHF, where the request message carries TunInf61, SrvInd61, and GrpId51.

Specifically, the SMF delivers a forwarding action rule (Forwarding Action Rule, FAR), a packet detection rule (Packet Detection Rule, PDR), or a locally configured charging policy by using the policy control function (Policy Control Function, PCF) device. When it is determined that charging needs to be performed on usage for the forwarding through the N19 tunnel, the charging resource creation request message is constructed, and the charging resource creation request message is sent to the CHF, where the request message includes TunInf61, SrvInd61, and GrpId51. SrvInd61 is second service indication information, and indicates that the N19 tunnel corresponding to TunInf61 is used for intra-group communication in the 5G local area network. GrpId51 is described in the method procedure corresponding to FIG. 5A and FIG. 5B, and details are not described again. In a possible solution, the request message may not carry SrvInd61.

Specifically, the SMF may send the request message to the CHF when delivering an instruction to the UPF to establish the N19 tunnel, or when the UPF returns an indication indicating that the N19 tunnel is successfully established.

An example of a charging resource creation request message is as follows:

```
ChargingResourceCreateRequest {
    "TUN-INF" {//TunInf61, information about an N19 tunnel
        "TEID": "TEID-404-404'7/TEId61, identifier of the N19 tunnel
        "OTHER": "..."//other information about the N19 tunnel
    }
    "SRVIND": "For 5G LAN group comm"//SrvInd61, second service indication information
    "GRPID": "GRP414"//GrpldS1, group identifier
```

}Step 683: The CHF creates the charging resource, and stores TunInf61, SrvInd51, and GrpId51.

Specifically, the CHF receives the charging resource creation request message, obtains TunInf61, SrvInd61, and GrpId51 through parsing, and further performs the following operations.

(1) Determine, based on SrvInd61, that the N19 tunnel corresponding to TunInf61 is used for intra-group communication in the 5G local area network. If the charging resource creation request message does not include SrvInd61, the CHF may consider by default that the N19 tunnel is used for intra-group communication in the 5G local area network, and generate indication information SrvInd61.

(2) Create the corresponding charging resource for the N19 tunnel, and allocate an identifier ResId61 for the charging resource.

Optionally, the CHF stores TunInf61 and GrpId51, and further stores the foregoing received or determined SrvInd61. For example, the CHF stores TunInf61 correspondingly to SrvInd61, GrpId51, and ResId61.

Optionally, after creating the charging resource corresponding to the N19 tunnel, the SMF delivers the PDR and/or the URR to UPF devices (such as the UPF device 403 and the UPF device 404) at two ends of the N19 tunnel, to indicate the UPF to collect charging data in the N19 tunnel.

It can be noted that the charging resource created for the N19 tunnel is shared across PDU sessions, and usage transmitted in the N19 tunnel caused by communication between different UE are all reported to a charging processing device through the charging resource, that is, the usage is reported by using a charging request message (for example, a charging resource update request message or a charging resource deletion request message) that carries the charging resource identifier.

Step 684: The CHF sends a charging resource creation response message to the SMF, where the response message carries ResId61.

Specifically, the CHF constructs the charging resource creation response message and sends the charging resource creation response message to the SMF, where the response message carries ResId61.

An example of a charging resource creation response message is as follows:

```
ChargingResourceCreateResponse {
        "RESID": "RES403-404"//ResId61, identifier of a charging resource of an N19 tunnel
    }
```

Step 689: The SMF determines usage USU61 and a transmission direction Dir61.

Specifically, the SMF separately interacts with the UPF device 403 and/or the UPF device 404 via the tunnel N4 session (Group N4 for N19), to obtain, from the UPF, the usage USU61 transmitted through the N19 tunnel.

Specifically, for the usage separately reported by the UPF devices (such as the UPF 403) at the two ends of the N19 tunnel, if there is duplicate usage (that is, the time periods of the two pieces of usage, identifiers of the UPF devices at the two ends, and the quantity of service units are the same), the SMF may combine and deduplicate the usage and then report usage to the CHF, or the CHF may combine and deduplicate the usage after the SMF reports the usage.

For example, it is assumed that an N19 tunnel is between a UPF 1 and a UPF 2, and the following two pieces of usage are duplicate usage:

```
        USU-INF {//usage information collected by the UPF 1
            during123//time period
            UPF 1//identifier of a UPF at one end of the N19 tunnel
            UPF 2//identifier of a UPF at the other end of the N19 tunnel
            10 M//quantity of service units
        }
        USU-INF {//usage information collected by the UPF 2
            during123//time period
            UPF 1// identifier of a UPF at one end of the N19 tunnel
            UPF 2//identifier of a UPF at the other end of the N19 tunnel
            10 M//quantity of service units
```

}"Deduplicate" means that one of the two pieces of usage is selected and the other is discarded.

Optionally, the SMF further determines the direction Dir61 in which the data packet corresponding to USU61 is transmitted in the N19 tunnel. Example values of the direction Dir61 and corresponding meanings are as follows: "403 to 404" indicates sending from the UPF device 403 to the UPF device 404, and "404 to 403" indicates sending from the UPF device 404 to the UPF device 403.

Step 690: The SMF sends a charging resource update request message to the CHF, where the request message includes Resld61, USU61, Dir61, TunInf61, SrvInd61, and Grpld51.

Specifically, the SMF constructs the charging resource update request message based on USU61 and Dir61 determined in step 689, and sends the charging resource update request message to the CHF, where the request message includes ResId61, USU61, Dir61, TunInf61, SrvInd61, and Grpld51.

An example of a charging resource update request message is as follows:

```
    ChargingResourceUpdateRequest{
        "RESID": "RES403-404"//ResId61, identifier of a charging resource of an N19 tunnel
        "USU-INF" {//usage information
            "USU": 10//USU61, indicating that usage is 10 megabits (MB)
            "DIR": "403-404"//Dir61
            "OTHER": "..."//other description information about the usage
        }
        "TUN-INF" {//TunInf61, information about the N19 tunnel
            "TEID": "TEID-404-404'7/TEId61, identifier of the N19 tunnel
            "OTHER": "..."//other information about the N19 tunnel
        }
        "SRVIND": "For 5G LAN group comm"//SrvInd61, second service indication information
        "GRPID": "GRP414"//GrpldS1, group identifier }
```

A parallel relationship between USU61 and Dir61 in the charging resource update request message is merely an example, but is not a limitation. In an actual application, another structural relationship may be used. For example, Dir61 may be placed outside a USU-INF data structure, and juxtaposed with SrvInd61, or the like.

In addition, if the CHF has stored TunInf61, SrvInd61 or GrpId51 in step 683, optionally, in order to avoid information redundant transmission, the charging resource update request message may not include TunInf61, SrvInd61, or GrpId51.

In a possible technical solution, the charging resource update request message may either not include Dir61.

Step 691: The CHF performs charging processing on USU61.

Specifically, the CHF receives the charging resource update request message in step 690, obtains ResId61, USU61, Dir61, TunInf61, SrvInd61, and GrpId51 through parsing, and then performs charging processing on USU61.

Specifically, the CHF may determine a charging rate based on any one or any combination of TunInf61, Dir61, SrvInd61, and GrpId51, and determine, based on GrpId51, an account corresponding to the 5G local area network group. If a charging mode is online charging, the CHF performs account deduction on the determined account based on the determined charging rate and USU61; or if a charging mode is offline charging, the CHF records any one or any combination of TunInf61, Dir61, SrvInd61, and GrpId51 and USU61 in a charging data record corresponding to the N19 tunnel.

If the received charging resource update request message does not include TunInf61, SrvInd61, or GrpId51, the CHF may obtain the previously stored TunInf61, SrvInd61, or GrpId51 locally based on ResId61.

Optionally, the CHF may obtain total usage of the 5G local area network group by accumulating in this step or in a subsequent step by using GrpId51 as an association identifier. For example, it is assumed that "GRPID" values in a plurality of ChargingResourceUpdateRequests received by the CHF are "GRP414", the CHF accumulates usage transmitted through the N19 tunnel in these ChargingResourceUpdateRequests, to obtain the usage of the 5G local area network group.

Step 692: The CHF sends a charging resource update response message to the SMF, where the response message includes ResId61 and a charging processing result ChgRst61.

Specifically, the CHF constructs the charging resource update response message, and sends the charging resource update response message to the SMF, where the charging resource update response message includes ResId61 and the charging processing result ChgRst61. Example values of the charging resource update response message and corresponding meanings are as follows: SucInDeduction indicates that account deduction succeeds, and SucInRecording indicates that writing of the charging data record succeeds.

An example of a charging resource update response message is as follows:

```
ChargingResourceUpdateResponse {
    "RESID": "RES403-404"//ResId61, identifier of a charging resource of an N19 tunnel
    "CHGRST": "SucInDeduction"|"SucInRecording" //ChgRst61
```

}Correspondingly, the SMF receives the charging resource update response message, obtains the charging processing result through parsing, and manages the N19 tunnel accordingly, for example, removes or releases the tunnel.

It can be understood that the foregoing process between step 689 and step 692 may be repeatedly performed until it is determined that the N19 tunnel is to be removed or released, and then step 693 is performed.

Step 693: The SMF determines to delete the charging resource, determines usage USU62, and determines a transmission direction Dir62.

Specifically, the SMF determines, based on a communication status between member UE in the 5G local area network group (for example, the N19 tunnel has no traffic for T consecutive seconds), to release the N19 tunnel, and accordingly determines to trigger the CHF to delete the charging resource previously created for the N19 tunnel. Because there is unreported usage, the SMF interacts with the UPF 403 and/or the UPF 404 to determine the usage USU62 transmitted through the N19 tunnel. Optionally, the SMF further determines the direction Dir62 in which a data packet corresponding to USU62 is transmitted in the N19 tunnel.

Step 694: The SMF sends a charging resource deletion request message to the CHF, where the request message includes ResId61, USU62, Dir62, TunInf61, SrvInd61, and GrpId51.

Specifically, the SMF constructs the charging resource deletion request message based on USU62 and Dir62 determined in step 693, and sends the charging resource deletion request message to the CHF, where the request message includes ResId61, USU62, Dir62, TunInf61, SrvInd61, and GrpId51.

An example of a charging resource deletion request message is as follows:

```
ChargingResourceUpdateRequest{
    "RESID": "RES403-404"//ResId61, identifier of a charging resource of an N19 tunnel
    "USU-INF" {//usage information
        "USU": 7//USU62, indicating that usage is 7 megabits (MB)
        "DIR": "404-403"//Dir62
        "OTHER": "..."//other description information about the usage }
    "TUN-INF" {//TunInf61, information about the N19 tunnel
```

```
        "TEID": "TEID-404-404'7/TEId61, identifier of the N19 tunnel
        "OTHER": "..."//other information about the N19 tunnel
    }
    "SRVIND": "For 5G LAN group comm"//SrvInd61, second service indication information
    "GRPID": "GRP414"//GrpIdS1, group identifier }
```

Similarly, the charging resource deletion request message may not include TunInf61, SrvInd61, or GrpId51.

In a possible technical solution, the charging resource deletion request message may either not include Dir62.

Step 695: The CHF performs charging processing on USU62, and deletes the charging resource.

Specifically, the CHF receives the charging resource deletion request message in step 694, obtains ResId61, USU62, Dir62, TunInf61, SrvInd61, and GrpId51 through parsing, and then performs charging processing on USU62. For details, refer to related descriptions in step 691.

If the received charging resource deletion request message does not include TunInf61, SrvInd61, or GrpId51, the CHF may obtain the previously stored TunInf61, SrvInd61, or GrpId51 locally based on ResId61.

After completing charging processing on USU62, the CHF deletes the previously created charging resource corresponding to ResId61, so as to reclaim a computing resource, such as a memory resource or a CPU resource, on the CHF occupied by the charging resource.

Step 696: The CHF sends a charging resource deletion response message to the SMF, where the response message includes ResId61, a charging processing result ChgRst62, and a resource deletion result DelRst61.

Specifically, the CHF constructs the charging resource deletion response message, and sends the charging resource deletion response message to the SMF. The charging resource deletion response message includes ResId61, the charging processing result ChgRst62, and the resource deletion result DelRst61. Example values of ChgRst62 and corresponding meanings are the same as those of ChgRst61, and details are not described again. An example value of DelRst61 and a corresponding meaning are as follows: "SucInDeleting" indicates that the charging resource corresponding to the N19 tunnel is successfully deleted.

An example of a charging resource deletion response message is as follows:

```
ChargingResourceDeleteResponse {
    "RESID": "RES403-404"//ResId61, identifier of a charging resource of an N19 tunnel
    "CHGRST": "SucInDeduction"|"SucInDeleting"//ChgRst62
    "DELRST": "SucInDeleting"//DelRst61
```

}Correspondingly, the SMF receives the charging resource deletion response message, obtains ChgRst62 and DelRst61 through parsing, and controls the N19 tunnel accordingly, for example, closes the N19 tunnel, to terminate the intra-group communication service of the UE.

In the method procedure corresponding to FIG. 6, the CHF creates a charging resource A for a PDU session, and creates a charging resource B for the N19 tunnel. Then, the SMF reports, by using an identifier of the charging resource A, usage of the PDU session, usage of forwarding through a local switching service, and usage of forwarding through an N6 interface, and reports, by using an identifier of the charging resource B, usage transmitted through the N19 tunnel. This can measure contribution of an operator communication network to the 5G local area network group communication more comprehensively, and improve charging accuracy.

In a possible solution, the CHF may separately create a charging resource A for a PDU session, create a charging resource B for a UPF device local switching service forwarding path, create a charging resource C for a UPF device N6 interface forwarding path, create a charging resource D for the UPF device through the N19 tunnel. Then, the SMF reports usage of the PDU session by using an identifier of the charging resource A, reports usage of the UPF device local switching service forwarding path in the PDU session by using an identifier of the charging resource B, reports usage of the N6 interface forwarding path in the PDU session by using an identifier of the charging resource C, and reports usage of the N19 tunnel forwarding path in the PDU session by using an identifier of the charging resource D. For details, refer to the method procedure corresponding to FIG. 6, and details are not described herein again.

It can be understood that the foregoing "report usage by using an identifier of a charging resource X" means that the identifier of the charging resource X, the to-be-reported usage, and related information about the usage are carried in the charging resource update request message or the charging resource deletion request message.

In the foregoing embodiment, it is assumed that charging information (usage information and/or quota application information) of all UE in the 5G local area network is processed by a same CHF device.

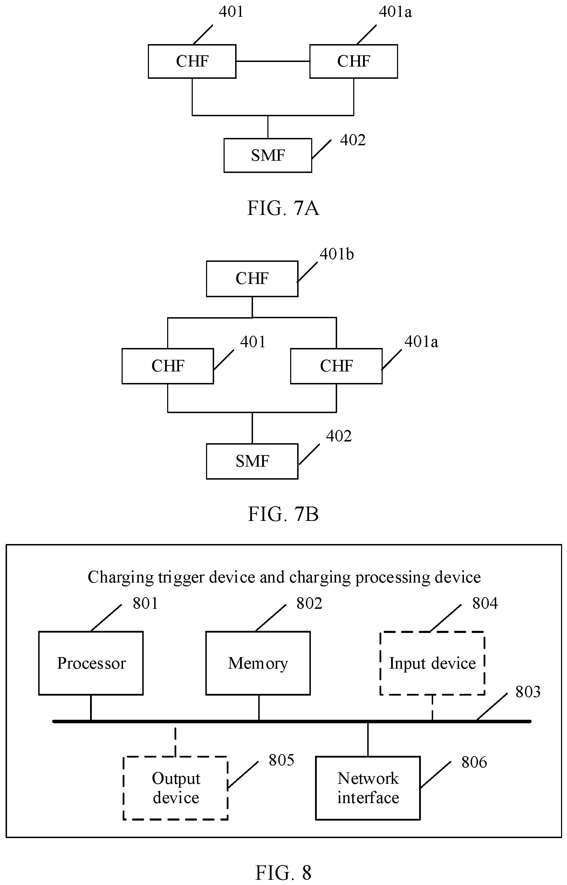

In a possible solution, charging information of all UE in the 5G local area network is processed by different CHF devices (one of the benefits of this is to reduce the burden on a single CHF device, and reduce a delay of intra-group communication). In this way, each CHF device learns of charging information of only some member UE. To perform charging processing on the entire 5G local area network group, the method shown in FIG. 7A may be used, or the method shown in FIG. 7B may be used.

FIG. 7A is a schematic diagram of first networking of a plurality of CHF devices according to an embodiment of this disclosure. In this networking, an SMF device 402 is separately connected to a CHF device 401 and a CHF device 401a, and the CHF device 401 is connected to the CHF device 401a. The SMF device reports charging information of some UE in a 5G local area network group to the CHF device 401 for processing, and reports charging information of other UE to the CHF device 401a for processing. To perform charging processing (for example, output a bill) on the entire 5G local area network group, the CHF device 401 may send, to the CHF device 401a for combination processing, the charging information of the UE that is received by the CHF device 401; or the CHF device 401a may send, to the CHF device 401 for combination processing, the charging information of the UE that is received by the CHF device 401a.

FIG. 7B is a schematic diagram of second networking of a plurality of CHF devices according to an embodiment of this disclosure. An SMF device reports charging information of some UE in a 5G local area network group to a CHF device 401 for processing, and reports charging information of other UE to the CHF device 401a for processing. To perform charging processing on the entire 5G local area network group, the CHF device 401 and the CHF device 401a separately send, to a CHF device 401b for combination processing, the charging information of the UE that is respectively received.

The foregoing combination process includes performing, by using an identifier of the 5G local area network group as an association identifier, summary statistics on different charging information that has the same identifier of the 5G local area network group.

FIG. 8 is a schematic diagram of hardware structures of a charging trigger device and a charging processing device according to an embodiment of this disclosure. In embodiments of this disclosure, all charging trigger devices (or SMF devices, such as 402 in FIG. 4A) and charging processing devices (or CHF devices, such as 401 in FIG. 4A) may be implemented by using the general-purpose computer hardware structure shown in FIG. 8 including a processor 801, a memory 802, a bus 803, an input device 804, an output device 805, and a network interface 806. The input device 804 and the output device 805 are optional.

Specifically, the memory 802 may include a computer storage medium in a form of a volatile memory and/or a nonvolatile memory, for example, a read-only memory and/or a random access memory. The memory 802 may store an operating system, an application, another program module, executable code, and program data.

The input device 804 may be configured to input information, so that a system administrator can operate and manage the charging trigger device and the charging processing device, for example, configure a charging parameter on the charging processing device, and set a default usage obtaining manner or a default quota application amount on the charging trigger device. The input device 804 may be a keyboard or a pointing device, such as a mouse, a trackball, a touchpad, a microphone, a joystick, a game pad, a satellite television antenna, a scanner, or a similar device, and may be connected to the processor 801 through the bus 803.

The output device 805 may be configured to output information, so that a system administrator can operate and manage the charging trigger device and the charging processing device, for example, display a charging policy on the charging processing device, and display a default usage obtaining manner or a default quota application amount on the charging trigger device. In addition to a monitor, the output device 805 may be another peripheral output device, such as a loudspeaker and/or a printing device, and may be connected to the processor 801 through the bus 803.

Both the charging trigger device and the charging processing device may be connected to a network, for example, connected to the internet, through the network interface 806. In a networked environment, computer-executable instructions stored in the charging trigger device and the charging processing device may be stored in a remote storage device, and is not limited to being stored locally.

When the processor 801 in the charging trigger device executes the executable code or the application stored in the memory 802, the charging trigger device is enabled to perform the method steps corresponding to the charging trigger device (or the SMF device) in all the foregoing embodiments, such as steps 310, 311, 360, 361, 501, 502, 505, 681, and 682. For a specific execution process, refer to the foregoing embodiments, and details are not described herein again.

When the processor 801 in the charging processing device executes the executable code or the application stored in the memory 802, the charging processing device is enabled to perform the method steps corresponding to the charging processing device (or the CHF device) in all the foregoing embodiments, such as steps 312, 362, 503, 507, 683, 691, and 695. For a specific execution process, refer to the foregoing embodiments, and details are not described herein again.

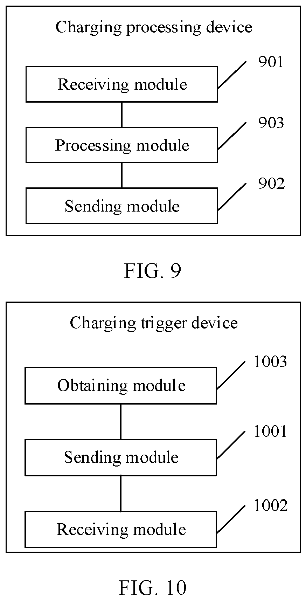

FIG. 9 is a schematic diagram of a logical structure of a charging processing device according to an embodiment of this disclosure. The charging processing device communicates with a charging trigger device, and is configured to perform charging processing on a mobile local area network service, where the mobile local area network service is a service in which a telecom operator network provides intra-group communication for a mobile local area network group based on at least one user plane data gateway managed by the charging trigger device. Specifically, the charging processing device includes a receiving module 901, a processing module 903, and a sending module 902.

The receiving module 901 is configured to receive a charging request message from the charging trigger device, where the charging request message includes local area network charging information, and the local area network charging information is charging information related to the mobile local area network service. For a specific execution process, refer to the step description of the charging processing device (or the CHF device) side in the foregoing embodiments, such as steps 312, 362, 503, 507, 683, 691, and 695.

The processing module 903 is configured to perform charging processing on the received local area network charging information to obtain a charging processing result. For a specific execution process, refer to the step description of the charging processing device (or the CHF device) side in the foregoing embodiments, such as steps 312, 362, 503, 507, 683, 691, and 695.

The sending module 902 is configured to send a charging response message to the charging trigger device, where the charging response message includes the obtained charging processing result. For a specific execution process, refer to the step description of the charging processing device (or the CHF device) side in the foregoing embodiments, for example, descriptions of the actions performed by the charging processing device (or the CHF device) in steps 313, 363, 504, 508, 512, 516, and 684.

FIG. 10 is a schematic diagram of a logical structure of a charging trigger device according to an embodiment of this disclosure. The charging trigger device communicates with a charging processing device, and is configured to perform charging processing on a mobile local area network service, where the mobile local area network service is a service in which a telecom operator provides intra-group communication for a mobile local area network group based on the at least one user plane data gateway managed by the charging trigger device. Specifically, the charging trigger device includes an obtaining module 1003, a sending module 1001, and a receiving module 1002.

The obtaining module 1003 is configured to obtain local area network charging information, where the local area network charging information is charging information related to the mobile local area network service. For a specific execution process, refer to the step description of the charging trigger device (or the SMF device) side in the foregoing embodiments, such as steps 310, 360, 361, 501, 505, 681, and 689.

The sending module 1001 is configured to send a charging request message to the charging processing device, where the charging request message includes the obtained local area network charging information. For a specific execution process, refer to the step description of the charging trigger device (or the SMF device) side in the foregoing embodiments, such as steps 310, 311, 360, 361, 501, 502, 505, 681, and 682.

The receiving module 1002 is configured to receive a charging response message from the charging processing device, where the charging response message includes a charging processing result, and the charging processing result is a result of charging processing performed by the charging processing device on the local area network charging information. For a specific execution process, refer to the step description of the charging trigger device (or the SMF device) side in the foregoing embodiments, for example, the descriptions of the actions performed by the charging trigger device (or the SMF device) in steps 313, 363, 504, 508, 512, 516, and 684.

The charging processing device shown in FIG. 9 and the charging trigger device shown in FIG. 10 each are presented in a form of function modules. The "module" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that these devices may alternatively be in the form shown in FIG. 8. For example, the receiving module 901, the sending module 1001, the sending module 902, and the receiving module 1002 may all be implemented by using the processor 801 and the memory 802 in FIG. 8. For example, both a function of receiving the charging request message by the receiving module 901 and a function of sending the charging request message by the sending module 1001 may be implemented by the processor 801 by executing code stored in the memory 802.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this disclosure.

It may be clearly understood by a person of ordinary skill in the art that, for ease and brief description, for a detailed working process of the foregoing system, apparatus and units, refer to a corresponding process in the foregoing method embodiments, and details are not described herein again.

In the several embodiments provided in this disclosure, it can be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this disclosure.

In addition, functional units in embodiments of this disclosure may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this disclosure essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this disclosure. The foregoing storage medium includes any medium that can store program code, such as a USB flash drive, a removable hard disk, a read-only memory, a random access memory, a magnetic disk, or an optical disc.

The foregoing descriptions are merely specific embodiments of this disclosure, but are not intended to limit the protection scope of this disclosure. Any modification or replacement readily figured out by a person skilled in the art within the technical scope disclosed in this disclosure shall fall within the protection scope of this disclosure. Therefore, the protection scope of this disclosure shall be subject to the protection scope of the claims.

**Claims**

1. A method for performing charging processing on a mobile local area network service, applied to a charging trigger device, wherein the charging trigger device communicates with a charging processing device, the charging trigger device manages at least one user plane data gateway, the mobile local area network service is a service that provides intra-group communication for a mobile local area network group based on the at least one user plane data gateway, and the method comprises:

sending a charging request message to the charging processing device, wherein the charging request message comprises local area network charging information obtained by the charging trigger device, and the local area network charging information is charging information related to the mobile local area network service; and
receiving a charging response message from the charging processing device, wherein the charging response message comprises a charging processing result, and the charging processing result is a result of charging processing performed by the charging processing device on the local area network charging information.

2. The method according to claim 1, wherein
the local area network charging information comprises charging information of a member data connection session, the charging processing result comprises a result of charging processing performed by the charging processing device on the charging information of the member data connection session; and the member data connection session is a data connection session between a member user device in the mobile local area network group that uses the mobile local area network service and a corresponding user plane data gateway.

3. The method according to claim 2, wherein
the charging information of the member data connection session comprises first service indication information, and the first service indication information indicates that the member data connection session is used for intra-group communication in the mobile local area network group.

4. The method according to claim 2 or 3, wherein
the charging information of the member data connection session comprises a group identifier, and the group identifier is an identifier of the mobile local area network group.

5. The method according to any one of claims 2 to 4, wherein

the charging information of the member data connection session further comprises first charging data, and the first charging data comprises usage of and/or a quota application amount for the member data connection session; and

the charging processing result comprises a result of charging processing performed by the charging processing device on the first charging data.

6. The method according to claim 5, wherein
the charging information of the member data connection session further comprises an intra-group forwarding manner corresponding to the first charging data.

7. The method according to claim 5 or 6, wherein
the charging information of the member data connection session further comprises an intra-group communication mode of the member user device, and the intra-group communication mode is any one of the following: unicast, multicast, or broadcast.

8. The method according to any one of claims 2 to 7, wherein

the charging request message requests the charging processing device to create a charging resource for the member data connection session, the charging processing result comprises an identifier of the charging resource created by the charging processing device for the member data connection session;
the charging request message requests the charging processing device to update a charging resource of the member data connection session, the charging processing result comprises a result of updating the charging resource of the member data connection session; or
the charging request message requests the charging processing device to delete a charging resource of the member data connection session, the charging processing result comprises a result of deleting the charging resource of the member data connection session.

9. The method according to claim 1, wherein

the charging trigger device manages two or more user plane data gateways, and the local area network charging information comprises charging information of an inter data gateway tunnel, the charging processing result comprises a result of charging processing performed by the charging processing device on the charging information of the inter data gateway tunnel; and
the inter data gateway tunnel is a data transmission tunnel between two user plane data gateways managed by the charging trigger device, and the charging information of the inter data gateway tunnel comprises information about the inter data gateway tunnel.

10. The method according to claim 9, wherein
the charging information of the inter data gateway tunnel further comprises second service indication information, and the second service indication information indicates that the inter data gateway tunnel is used for intra-group communication in the mobile local area network group.

11. The method according to claim 9 or 10, wherein
the charging information of the inter data gateway tunnel further comprises a group identifier, and the group identifier is an identifier of the mobile local area network group.

12. The method according to any one of claims 9 to 11, wherein

the charging information of the member data connection session further comprises second charging data, and the second charging data comprises usage transmitted through the inter data gateway tunnel; and
the charging processing result comprises a result of charging processing performed by the charging processing device on the second charging data.

13. The method according to any one of claims 9 to 12, wherein

the charging request message requests the charging processing device to create a charging resource for the inter data gateway tunnel, the charging processing result comprises an identifier of the charging resource created by the charging processing device for the inter data gateway tunnel;

the charging request message requests the charging processing device to update a charging resource of the inter data gateway tunnel, the charging processing result comprises a result of updating the charging resource of the inter data gateway tunnel; or

the charging request message requests the charging processing device to delete a charging resource of the inter data gateway tunnel, the charging processing result comprises a result of deleting the charging resource of the inter data gateway tunnel.

14. A method for performing charging processing on a mobile local area network service, applied to a charging processing device, wherein the charging processing device communicates with a charging trigger device, the mobile local area network service is a service that provides intra-group communication for a mobile local area network group, and the method comprises:

receiving a charging request message from the charging trigger device, wherein the charging request message comprises local area network charging information obtained by the charging trigger device, and the local area network charging information is charging information related to the mobile local area network service; and

sending a charging response message to the charging trigger device, wherein the charging response message comprises a charging processing result, and the charging processing result is a result of charging processing performed by the charging processing device on the local area network charging information.

15. The method according to claim 14, wherein

the local area network charging information comprises charging information of a member data connection session, before the sending a charging response message to the charging trigger device, the method further comprises: performing charging processing on the charging information of the member data connection session, wherein the charging processing result comprises a result of performing charging processing on the charging information of the member data connection session; and

the member data connection session is a data connection session between a member user device in the mobile local area network group that uses the mobile local area network service and a corresponding user plane data gateway.

16. The method according to claim 15, wherein
the charging information of the member data connection session comprises first service indication information, the performing charging processing on the charging information of the member data connection session comprises:
determining, based on the first service indication information, that the member data connection session is used for intra-group communication in the mobile local area network group.

17. The method according to claim 16, wherein the performing charging processing on the charging information of the member data connection session further comprises:
performing, based on the first service indication information, authentication on whether the member user device can use the mobile local area network service, wherein the charging processing result comprises a result of the authentication.

18. The method according to any one of claims 15 to 17, wherein
the charging information of the member data connection session comprises a group identifier, and the group identifier is an identifier of the mobile local area network group, the performing charging processing on the charging information of the member data connection session comprises any one of the following:

determining, based on the group identifier, an account corresponding to the mobile local area network group;
recording the group identifier in a charging data record of the member data connection session;
associating usage of members by using the group identifier as an association identifier and obtaining usage of the mobile local area network group through accumulation; or
querying, based on the group identifier, an external group identifier corresponding to the mobile local area network group, so as to perform charging processing on the charging information of the member data connection session based on the external group identifier.

19. The method according to any one of claims 15 to 18, wherein
the charging information of the member data connection session comprises first charging data, and the first charging data comprises usage of and/or a quota application amount for the member data connection session, the performing charging processing on the charging information of the member data connection session comprises: performing charging processing on the first charging data, wherein the charging processing result comprises a result of performing charging processing on the first charging data.

20. The method according to claim 19, wherein
the charging information of the member data connection session further comprises an intra-group forwarding manner corresponding to the first charging data, the performing charging processing on the charging information of the member data connection session further comprises:
determining a charging rate of the first charging data based on the intra-group forwarding manner, or recording, in a charging data record of the member data connection session, the first charging data and the intra-group forwarding manner corresponding to the first charging data.

21. The method according to claim 19 or 20, wherein
the charging information of the member data connection session further comprises an intra-group communication mode of the member user device, and the intra-group communication mode is any one of the following: unicast, multicast, or broadcast, the performing charging processing on the charging information of the member data connection session further comprises:
determining the charging rate of the first charging data based on the intra-group communication mode, or recording the intra-group communication mode in the charging data record of the member data connection session.

22. The method according to any one of claims 15 to 21, wherein

the charging request message requests the charging processing device to create a charging resource for the member data connection session, the performing charging processing on the charging information of the member data connection session comprises: creating the charging resource for the member data connection session, wherein the charging processing result comprises an identifier of the charging resource;
the charging request message requests the charging processing device to update a charging resource of the member data connection session, the performing charging processing on the charging information of the member data connection session comprises: updating the charging resource of the member data connection session, wherein the charging processing result comprises a result of updating the charging resource of the member data connection session; or
the charging request message requests the charging processing device to delete a charging resource of the member data connection session, the performing charging processing on the charging information of the member data connection session comprises: deleting the charging resource of the member data connection session, wherein the charging processing result comprises a result of deleting the charging resource of the member data connection session.

23. The method according to claim 14, wherein

the local area network charging information comprises charging information of an inter data gateway tunnel, before the sending a charging response message to the charging trigger device, the method further comprises: performing charging processing on the charging information of the inter data gateway tunnel, wherein the charging processing result comprises a result of performing charging processing on the charging information of the inter data gateway tunnel; and
the inter data gateway tunnel is a data transmission tunnel between two user plane data gateways managed by the charging trigger device, and the charging information of the inter data gateway tunnel comprises information about the inter data gateway tunnel.

24. The method according to claim 23, wherein
the charging information of the inter data gateway tunnel further comprises second service indication information, the performing charging processing on the charging information of the inter data gateway tunnel comprises: determining, based on the second service indication information, that the inter data gateway tunnel is used for intra-group communication in the mobile local area network group.

25. The method according to claim 23 or 24, wherein
the charging information of the inter data gateway tunnel further comprises a group identifier, and the group identifier is an identifier of the mobile local area network group, the performing charging processing on the charging information of the inter data gateway tunnel comprises any one of the following:

determining, based on the group identifier, an account corresponding to the mobile local area network group;

recording the group identifier in a charging data record of the inter data gateway tunnel; or

querying, based on the group identifier, an external group identifier corresponding to the mobile local area network group, so as to perform charging processing on the charging information of the inter data gateway tunnel based on the external group identifier.

26. The method according to any one of claims 23 to 25, wherein
the charging information of the member data connection session further comprises second charging data, and the second charging data comprises usage transmitted through the inter data gateway tunnel, the performing charging processing on the charging information of the inter data gateway tunnel further comprises: performing charging processing on the second charging data, wherein the charging processing result comprises a result of performing charging processing on the second charging data.

27. The method according to any one of claims 23 to 26, wherein

the charging request message requests the charging processing device to create a charging resource for the inter data gateway tunnel, the performing charging processing on the charging information of the inter data gateway tunnel comprises: creating the charging resource for the inter data gateway tunnel, wherein the charging processing result comprises an identifier of the charging resource;

the charging request message requests the charging processing device to update a charging resource of the inter data gateway tunnel, the performing charging processing on the charging information of the inter data gateway tunnel comprises: updating the charging resource of the inter data gateway tunnel, wherein the charging processing result comprises a result of updating the charging resource of the inter data gateway tunnel; or

the charging request message requests the charging processing device to delete a charging resource of the inter data gateway tunnel, the performing charging processing on the charging information of the inter data gateway tunnel comprises: deleting the charging resource of the inter data gateway tunnel, wherein the charging processing result comprises a result of deleting the charging resource of the inter data gateway tunnel.

28. A charging processing system, configured to perform charging processing on a mobile local area network service and comprising a charging trigger device and a charging processing device, wherein the charging trigger device communicates with the charging processing device, the charging trigger device manages at least one user plane data gateway, and the mobile local area network service is a service that provides intra-group communication for a mobile local area network group based on the at least one user plane data gateway;

the charging trigger device is configured to send a charging request message to the charging processing device, wherein the charging request message comprises local area network charging information obtained by the charging trigger device, and the local area network charging information is charging information related to the mobile local area network service;

the charging processing device is configured to: receive the charging request message from the charging trigger device, and send a charging response message to the charging trigger device, wherein the charging response message comprises a charging processing result, and the charging processing result is a result of charging processing performed by the charging processing device on the local area network charging information; and

the charging trigger device is further configured to receive the charging response message from the charging processing device.

29. The charging processing system according to claim 28, wherein

the local area network charging information comprises charging information of a member data connection session, the charging processing device is further configured to perform charging processing on the charging information of the member data connection session, wherein the charging processing result comprises a result of charging processing performed by the charging processing device on the charging information of the member data connection session; and

the member data connection session is a data connection session between a member user device in the mobile local area network group that uses the mobile local area network service and a corresponding user plane data gateway.

30. The charging processing system according to claim 29, wherein
the charging information of the member data connection session comprises first service indication information, the charging processing device is further configured to determine, based on the first service indication information, that the member data connection session is used for intra-group communication in the mobile local area network group.

31. The charging processing system according to claim 30, wherein
the charging processing device is further configured to perform, based on the first service indication information, authentication on whether the member user device can use the mobile local area network service, and the charging processing result comprises a result of the authentication.

32. The charging processing system according to any one of claims 29 to 31, wherein
the charging information of the member data connection session further comprises a group identifier, and the group identifier is an identifier of the mobile local area network group, the charging processing device is further configured to:

determine, based on the group identifier, an account corresponding to the mobile local area network group;
record the group identifier in a charging data record of the member data connection session;
associate usage of members by using the group identifier as an association identifier and obtain usage of the mobile local area network group through accumulation; or
query, based on the group identifier, an external group identifier corresponding to the mobile local area network group, so as to perform charging processing on the charging information of the member data connection session based on the external group identifier.

33. The charging processing system according to any one of claims 29 to 32, wherein
the charging information of the member data connection session comprises first charging data and an intra-group forwarding manner, and the first charging data comprises usage of and/or a quota application amount for the member data connection session, the charging processing device is further configured to:

determine a charging rate of the first charging data based on the intra-group forwarding manner; or
record, in the charging data record of the member data connection session, the first charging data and the intra-group forwarding manner corresponding to the first charging data.

34. The charging processing system according to claim 28, wherein

the charging trigger device manages two or more user plane data gateways, and the local area network charging information comprises charging information of an inter data gateway tunnel, the charging processing device is further configured to: before sending the charging response message to the charging trigger device, perform charging processing on the charging information of the inter data gateway tunnel, wherein the charging processing result comprises a result of charging processing performed by the charging processing device on the charging information of the inter data gateway tunnel; and
the inter data gateway tunnel is a data transmission tunnel between two user plane data gateways managed by the charging trigger device, and the charging information of the inter data gateway tunnel comprises information about the inter data gateway tunnel.

35. The charging processing system according to claim 34, wherein
the charging information of the inter data gateway tunnel further comprises second service indication information, the charging processing device is further configured to determine, based on the second service indication information, that the inter data gateway tunnel is used to provide the mobile local area network service.

36. The charging processing system according to claim 34 or 35, wherein
the charging information of the inter data gateway tunnel further comprises a group identifier, and the group identifier is an identifier of the mobile local area network group, the charging processing device is further configured to:

determine, based on the group identifier, an account corresponding to the mobile local area network group;
record the group identifier in a charging data record of the inter data gateway tunnel; or
query, based on the group identifier, an external group identifier corresponding to the mobile local area network group, so as to perform charging processing on the charging information of the inter data gateway tunnel based on the external group identifier.

37. A charging trigger device, configured to perform charging processing on a mobile local area network service, wherein the charging trigger device communicates with a charging processing device, the charging trigger device manages at least one user plane data gateway, the mobile local area network service is a service that provides intra-group communication for a mobile local area network group based on the at least one user plane data gateway, and the charging trigger device comprises an obtaining module, a sending module, and a receiving module;

the obtaining module is configured to obtain local area network charging information, wherein the local area network charging information is charging information related to the mobile local area network service;
the sending module is configured to send a charging request message to the charging processing device, wherein the charging request message comprises the local area network charging information; and
the receiving module is configured to receive a charging response message from the charging processing device, wherein the charging response message comprises a charging processing result, and the charging processing result is a result of charging processing performed by the charging processing device on the local area network charging information.

38. The charging trigger device according to claim 37, wherein

the local area network charging information comprises charging information of a member data connection session, the charging processing result comprises a result of charging processing performed by the charging processing device on the charging information of the member data connection session; and
the member data connection session is a data connection session between a member user device in the mobile local area network group that uses the mobile local area network service and a corresponding user plane data gateway.

39. The charging trigger device according to claim 38, wherein
the charging information of the member data connection session comprises first service indication information, and the first service indication information indicates that the member data connection session is used for intra-group communication in the mobile local area network group.

40. The charging trigger device according to claim 38 or 39, wherein
the charging information of the member data connection session comprises a group identifier, and the group identifier is an identifier of the mobile local area network group.

41. The charging trigger device according to any one of claims 38 to 40, wherein
the charging information of the member data connection session comprises first charging data and an intra-group forwarding manner, and the first charging data comprises usage of and/or a quota application amount for the member data connection session.

42. The charging trigger device according to claim 37, wherein

the charging trigger device manages two or more user plane data gateways, and the local area network charging information comprises charging information of an inter data gateway tunnel, the charging processing result comprises a result of charging processing performed by the charging processing device on the charging information of the inter data gateway tunnel; and
the inter data gateway tunnel is a data transmission tunnel between two user plane data gateways managed by the charging trigger device, and the charging information of the inter data gateway tunnel comprises information about the inter data gateway tunnel.

43. The charging trigger device according to claim 42, wherein
the charging information of the inter data gateway tunnel further comprises second service indication information, and the second service indication information indicates that the inter data gateway tunnel is used for intra-group communication in the mobile local area network group.

44. The charging trigger device according to claim 42 or 43, wherein
the charging information of the inter data gateway tunnel further comprises a group identifier, and the group identifier is an identifier of the mobile local area network group.

45. A charging processing device, configured to perform charging processing on a mobile local area network service, wherein the charging processing device communicates with a charging trigger device, the mobile local area network service is a service that provides intra-group communication for a mobile local area network group, and the charging processing device comprises a receiving module, a processing module, and a sending module;

the receiving module is configured to receive a charging request message from the charging trigger device, wherein the charging request message comprises local area network charging information, and the local area network charging information is charging information related to the mobile local area network service; the processing module is configured to perform charging processing on the local area network charging information to obtain a charging processing result; and the sending module is configured to send a charging response message to the charging trigger device, wherein the charging response message comprises the charging processing result.

46. The charging processing device according to claim 45, wherein

the local area network charging information comprises charging information of a member data connection session, the processing module is further configured to perform charging processing on the charging information of the member data connection session, and the charging processing result comprises a result of charging processing performed by the processing module on the charging information of the member data connection session; and the member data connection session is a data connection session between a member user device in the mobile local area network group that uses the mobile local area network service and a corresponding user plane data gateway.

47. The charging processing device according to claim 46, wherein the charging information of the member data connection session comprises first service indication information, the processing module is further configured to determine, based on the first service indication information, that the member data connection session is used for intra-group communication in the mobile local area network group.

48. The charging processing device according to claim 47, wherein the processing module is further configured to perform, based on the first service indication information, authentication on whether the member user device can use the mobile local area network service.

49. The charging processing device according to any one of claims 46 to 48, wherein the charging information of the member data connection session comprises a group identifier, and the group identifier is an identifier of the mobile local area network group, the processing module is further configured to:

determine, based on the group identifier, an account corresponding to the mobile local area network group; record the group identifier in a charging data record of the member data connection session; associating usage of members by using the group identifier as an association identifier and obtaining usage of the mobile local area network group through accumulation; or query, based on the group identifier, an external group identifier corresponding to the mobile local area network group, so as to perform charging processing on the charging information of the member data connection session based on the external group identifier.

50. The charging processing device according to any one of claims 46 to 49, wherein the charging information of the member data connection session comprises first charging data and an intra-group forwarding manner, and the first charging data comprises usage of and/or a quota application amount for the member data connection session, and the processing module is further configured to:

determine a charging rate of the first charging data based on the intra-group forwarding manner; or record, in the charging data record of the member data connection session, the first charging data and the intra-group forwarding manner corresponding to the first charging data.

51. The charging processing device according to claim 45, wherein

the local area network charging information comprises charging information of an inter data gateway tunnel, before the sending module sends the charging response message to the charging trigger device, the processing module is further configured to perform charging processing on the charging information of the inter data gateway tunnel; and the inter data gateway tunnel is a data transmission tunnel between two user plane data gateways managed by the charging trigger device, and the charging information of the inter data gateway tunnel comprises information about the inter data gateway tunnel.

52. The charging processing device according to claim 51, wherein
the charging information of the inter data gateway tunnel further comprises second service indication information, the processing module is further configured to determine, based on the second service indication information, that the inter data gateway tunnel is used for intra-group communication in the mobile local area network group.

53. The charging processing device according to claim 51 or 52, wherein
the charging information of the inter data gateway tunnel further comprises a group identifier, and the group identifier is an identifier of the mobile local area network group, the charging processing device is further configured to:

determine, based on the group identifier, an account corresponding to the mobile local area network group;
record the group identifier in a charging data record of the inter data gateway tunnel; or
query, based on the group identifier, an external group identifier corresponding to the mobile local area network group, so as to perform charging processing on the charging information of the inter data gateway tunnel based on the external group identifier.

54. A charging trigger device, comprising a processor and a memory, wherein

the memory is configured to store program instructions; and
the processor is configured to invoke the program instructions stored in the memory and execute the program instructions, so that the charging trigger device performs the charging processing method according to any one of claims 1 to 13.

55. A charging processing device, comprising a processor and a memory, wherein

the memory is configured to store program instructions; and
the processor is configured to invoke the program instructions stored in the memory and execute the program instructions, so that the charging processing device performs the charging processing method according to any one of claims 14 to 27.

56. A computer-readable storage medium, comprising instructions, wherein when the instructions are run on a computer, the computer is enabled to perform the charging processing method according to any one of claims 1 to 27.

Charging
processing device

101

Control plane data gateway
/Charging trigger device

102

103

103P

104

105

103P

106

User
device

Access
device

User plane data
gateway

Data network

FIG. 1

Control plane
data gateway                               202

User plane
data gateway              203          204              205

                              Inter user-
                              plane-data-
                              gateway
                              tunnel

                  206              207        208              209
              Access                                      Access
              device                                      device

                  210              211        212              213

User device                                              User device

Interface between a                              Interface between a
user plane data gateway              216         user plane data gateway
and a data network                               and a data network

Data network

FIG. 2A

FIG. 2B

Charging processing device
(charging processing module)

201

Control plane data gateway
(charging trigger module)

202

203

204

205

FIG. 3A

Charging trigger device

Charging processing device

S310: Obtain charging information of a member data connection session

S311: Charging request message (charging information of the member data connection session)

S312: Perform charging processing on the charging information of the member data connection session

S313: Charging response message (charging processing result of the member data connection session)

*A plurality of executions*

S349: Perform charging processing on a mobile local area network group

FIG. 3B

Charging trigger device

Charging processing device

S350 to S353: Perform charging processing on charging information of a member data connection session

*A plurality of executions*

S360: Obtain charging information of a tunnel between data gateways

S361: Charging request message (charging information of the tunnel between data gateways)

S362: Perform charging processing on the charging information of the tunnel between the data gateways

S363: Charging response message (charging processing result of the tunnel between data gateways)

*A plurality of executions*

S399: Perform charging processing on a mobile local area network group

FIG. 3C

FIG. 4A

FIG. 4B

410      406a      406i      403

| UE | — | (R)AN | N3 | I-UPF | N9 | PSA UPF |

N19

| UE | — | (R)AN | N3 | I-UPF | N9 | PSA UPF |

412      408a      408i      404

FIG. 4C

410      406a      406i      403

| UE | — | (R)AN | N3 | I-UPF | N9 | PSA UPF |

N6    416

DN

N6    405

413      409a      409i

| UE | — | (R)AN | N3 | I-UPF | N9 | PSA UPF |

FIG. 4D

| SMF | CHF |
| --- | --- |

S501: Receive a PDU session setup request sent by UE 410, and determine that a PDU session is used for intra-group communication in a 5G local area network group

S502: Charging resource creation request (SesId51, UEId51, SrvInd51, GrpId51)

S503: Create a charging resource, and store SrvInd51 and GrpId51

S504: Charging resource creation response (ResId51)

S505: Determine a quota application amount RSU51, an intra-group forwarding manner Fwd51, and an intra-group communication mode Com51

S506: Charging resource update request (ResId51, RSU51, Fwd51, SrvInd51, GrpId51, Com51)

S507: Grant a quota GSU51 corresponding to RSU51

S508: Charging resource update response (ResId51, GSU51)

S509: Determine usage USU51, an intra-group forwarding manner Fwd52, and an intra-group communication mode Com52

S510: Charging resource update request (ResId51, USU51, Fwd52, SrvInd51, GrpId51, Com52)

S511: Perform charging processing on USU51

S512: Charging resource update response (ResId51, ChgRst51)

...

TO FIG. 5B

TO FIG. 5B

FIG. 5A

CONT.
FROM
FIG. 5A

CONT.
FROM
FIG. 5A

S513: Determine to delete the charging resource, determine usage USU52, and determine an intra-group forwarding manner Fwd53 and an intra-group communication mode Com53

S514: Charging resource deletion request (ResId51, USU52, SrvInd51, GrpId51, Fwd53, Com53)

S515: Perform charging processing on USU52, and delete the charging resource

S516: Charging resource deletion response (ResId51, ChgRst52, DelRst51)

Charging processing process of the PDU session of the UE 410

S521 to S536: Charging processing process of a PDU session of UE 411

S541 to S556: Charging processing process of a PDU session of UE 412

S561 to S576: Charging processing process of a PDU session of UE 413

S599: Perform charging processing on a 5G local area network group 414

FIG. 5B

SMF · · · · · · · · · · · · · · · · · · · · · · · · · · · · · · · · · · · · · CHF

S601 to S676: Charging processing processes of PDU sessions of UE 410 to UE 413

S681: Establish an N19 tunnel between a UPF device 403 and a UPF device 404, and generate tunnel information TunInf61

S682: Charging resource creation request (TunInf61, SrvInd61, GrpId51)

S683: Create a charging resource, and store TunInf61, SrvInd61, and GrpId51

S684: Charging resource creation response (ResId61)

S689: Determine usage USU61 and a transmission direction Dir61

S690: Charging resource update request (ResId61, USU61, Dir61, TunInf61, SrvInd61, GrpId51)

S691: Perform charging processing on USU61

S692: Charging resource update response (ResId61, ChgRst61)

...

S693: Determine to delete the charging resource, and determine usage USU62 and a transmission direction Dir62

S694: Charging resource deletion request (ResId61, USU62, Dir61, TunInf61, SrvInd61, GrpId51)

S695: Perform charging processing on USU62, and delete the charging resource

S696: Charging resource deletion response (ResId61, ChgRst62, DelRst61)

N19-403-404 charging processing process

S699: Perform charging processing on a 5G local area network group 414

FIG. 6

401          401a

CHF          CHF

SMF          402

FIG. 7A

CHF          401b

401          CHF          401a

CHF          CHF

SMF          402

FIG. 7B

Charging trigger device and charging processing device

801          802          804

Processor    Memory       Input device

803

Output       805          Network      806
device                    interface

FIG. 8

Charging processing device

Receiving module — 901

Processing module — 903

Sending module — 902

FIG. 9

Charging trigger device

Obtaining module — 1003

Sending module — 1001

Receiving module — 1002

FIG. 10

## INTERNATIONAL SEARCH REPORT

| International application No. |
|---|
| **PCT/CN2022/072382** |

| A. | CLASSIFICATION OF SUBJECT MATTER |
|---|---|
| | H04W 4/24(2009.01)i;  H04L 12/14(2006.01)i |

According to International Patent Classification (IPC) or to both national classification and IPC

| B. | FIELDS SEARCHED |
|---|---|

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; ENTXTC; VEN; ENTXT; 3GPP: 计费, 移动 5d 局域网, charg+, 5G 5d LAN, Virtual 5d group+, VN 3D group+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | 3GPP. "3GPP TR 28.822 V1.0.0 (2021-12)" *3rd Generation Partnership Project; Technical Specification Group Services and System Aspects Charging management Study on charging aspect of 5G LAN-type Services; (Release 17)*, 06 December 2021 (2021-12-06), sections 4-5 | 1-56 |
| Y | WO 2020205725 A1 (OFINNO L.L.C.) 08 October 2020 (2020-10-08) description, paragraphs [0120]-[0148], and figures 1-26 | 1-2, 5, 8, 14-15, 19, 22, 28-29, 37-38, 45-46, 54-56 |
| Y | SA WG5. "New SID on Charging Aspects of 5G LAN-type Services" *TSG SA Meeting #SA-90E SP-201081*, 02 December 2020 (2020-12-02), sections 3-4 | 1-2, 5, 8, 14-15, 19, 22, 28-29, 37-38, 45-46, 54-56 |
| Y | 3GPP. "3GPP TS 32.290 V17.0.0 (2020-12)" *3rd Generation Partnership Project; Technical Specification Group Services and System Aspects; Telecommunication management; Charging management; 5G system; Services, operations and procedures of charging using Service Based Interface (SBI) (Release 17)*, 17 December 2020 (2020-12-17), section 5 | 1-2, 5, 8, 14-15, 19, 22, 28-29, 37-38, 45-46, 54-56 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 February 2022** | **11 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**

</div>

| International application No. |
|---|
| **PCT/CN2022/072382** |

**C.    DOCUMENTS CONSIDERED TO BE RELEVANT**

| Category* | Citation of document, with indication, where appropriate, of the relevant passages | Relevant to claim No. |
|---|---|---|
| Y | 3GPP. "3GPP TS 22.261 V18.1.0 (2020-12)"<br>*3rd Generation Partnership Project; Technical Specification Group Services and System Aspects; Service requirements for the 5G system; Stage 1 (Release 18),*<br>17 December 2020 (2020-12-17),<br>    sections 6.26 and 9 | 1-2, 5, 8, 14-15, 19, 22, 28-29, 37-38, 45-46, 54-56 |
| A | CN 111917563 A (HUAWEI TECHNOLOGIES CO., LTD.) 10 November 2020 (2020-11-10)<br>    entire document | 1-56 |
| A | CN 107040674 A (HUAWEI TECHNOLOGIES CO., LTD.) 11 August 2017 (2017-08-11)<br>    entire document | 1-56 |
| A | US 2018270073 A1 (HUAWEI TECHNOLOGIES CO., LTD.) 20 September 2018 (2018-09-20)<br>    entire document | 1-56 |
| A | US 2020396673 A1 (SAMSUNG ELECTRONICS CO., LTD.) 17 December 2020 (2020-12-17)<br>    entire document | 1-56 |

Form PCT/ISA/210 (second sheet) (January 2015)

**INTERNATIONAL SEARCH REPORT**
Information on patent family members

International application No.

**PCT/CN2022/072382**

| Patent document cited in search report | | | Publication date (day/month/year) | Patent family member(s) | | | Publication date (day/month/year) |
|---|---|---|---|---|---|---|---|
| WO | 2020205725 | A1 | 08 October 2020 | US | 2021184875 | A1 | 17 June 2021 |
| | | | | EP | 3818662 | A1 | 12 May 2021 |
| | | | | CA | 3135354 | A1 | 08 October 2020 |
| CN | 111917563 | A | 10 November 2020 | WO | 2020224604 | A1 | 12 November 2020 |
| CN | 107040674 | A | 11 August 2017 | CN | 110634057 | A | 31 December 2019 |
| | | | | WO | 2017133342 | A1 | 10 August 2017 |
| | | | | US | 2018343347 | A1 | 29 November 2018 |
| | | | | US | 10924900 | B2 | 16 February 2021 |
| | | | | EP | 3402231 | A1 | 14 November 2018 |
| | | | | EP | 3402231 | A4 | 02 January 2019 |
| | | | | CN | 107040674 | B | 20 April 2021 |
| US | 2018270073 | A1 | 20 September 2018 | WO | 2018166454 | A1 | 20 September 2018 |
| US | 2020396673 | A1 | 17 December 2020 | WO | 2020251302 | A1 | 17 December 2020 |
| | | | | IN | 201941023638 | A | 18 December 2020 |
| | | | | IN | 202042022690 | A | 18 December 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110058017